(19) Europäisches Patentamt
European Patent Office
Office européen des brevets

(11) **EP 2 088 814 B1**

(12) **EUROPEAN PATENT SPECIFICATION**

(45) Date of publication and mention
of the grant of the patent:
**21.12.2016 Bulletin 2016/51**

(51) Int Cl.:
***H04W 16/26*** *(2009.01)*     ***H04B 7/155*** *(2006.01)*

(21) Application number: **08165785.0**

(22) Date of filing: **02.10.2008**

(54) **Radio relay station and radio terminal**

Funkrelaisstation und Funkendgerät

Station de relais radio et terminal radio

(84) Designated Contracting States:
**DE FR GB IT**

(30) Priority: **07.02.2008 JP 2008028037**

(43) Date of publication of application:
**12.08.2009 Bulletin 2009/33**

(73) Proprietor: **Fujitsu Limited
Kawasaki-shi, Kanagawa 211-8588 (JP)**

(72) Inventor: **Okuda, Masato
Kawasaki-shi,
Kanagawa 211-8588 (JP)**

(74) Representative: **Wilding, Frances Ward
Haseltine Lake LLP
Lincoln House, 5th Floor
300 High Holborn
London WC1V 7JH (GB)**

(56) References cited:
**EP-A1- 1 677 443**     **EP-A1- 1 830 490**
**EP-A2- 1 777 877**     **WO-A1-2005/067173**
**US-B1- 6 370 384**

• **"A Flexible Multi-hop Frame Structure for IEEE
802.16j ; C80216j-06_163r3", IEEE DRAFT;
C80216J-06_163R3, IEEE-SA, PISCATAWAY, NJ
USA, vol. 802.16j, 5 March 2007 (2007-03-05),
pages 1-11, XP017629985, [retrieved on
2007-03-06]**

**Description**

FIELD

The embodiment (s) discussed herein is directed to a radio relay station and a radio terminal. For example, the embodiment (s) may be employed for a radio relay communication technology that is called multi-hop relay.

BACKGROUND

IEEE 802.16WG (Working Group) in which IEEE Std 802.16 (TM)-2004 and IEEE Std 802.16e (TM)-2005 are specified specifies a Point-to-Multipoint (P-MP) communication scheme in which a plurality of radio terminals (mobile station: MS) may be connected to a single base station (BS).

The IEEE 802.16 standards includes two types of standards, the IEEE 802.16d (IEEE 802.16-2004) specification for fixed communications and the IEEE 802.16e (IEEE 802.16e-2005) for mobile communications. Both the standards specify multiple physical layers, but they involve the use of techniques such as OFDM (Orthogonal Frequency Division Multiplexing) and OFDMA (Orthogonal Frequency Division Multiple Access).

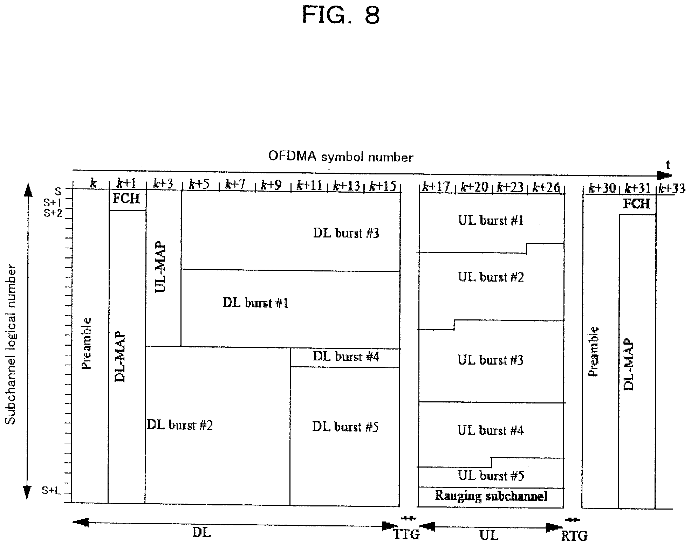

FIG. 8 illustrates an example of a radio frame format for OFDMA. In FIG. 8, the vertical axis indicates frequency (sub channels) and the horizontal axis indicates time (symbols).

As illustrated in FIG. 8, a radio frame for OFDMA includes a downlink (DL) sub frame and an uplink (UL) sub frame, with a constant time gap TTG inserted between the DL sub frame and the UL sub frame in the time axis direction. A fixed pattern of preamble signal is arranged at the head of the DL sub frame. A constant time gap RTG is located between the UP sub frame and the preamble signal of the subsequent DL sub frame.

Here, the DL sub frame is a frame that is transmitted from the base station (BS) to the radio terminal (MS: mobile station). On the contrary, the UL sub frame is a frame that is transmitted from the MS to the BS. That is, the DL sub frame corresponds to a transmitting region (transmission period) of the BS and to a receiving region (reception period) of the MS, and the UL sub frame corresponds to a transmitting region (transmission period) of the MS and to a receiving region (reception period) of the BS.

Also, the preamble signal is a fixed-pattern signal (synchronization signal) that allows the MS to detect the BS so as to establish a synchronization of a radio link with the BS. The DL-MAP and UL-MAP are signals that include information on allocation of radio resources (bursts) of the DL sub frame and the UL sub frame to the MS (for example, targeted MS and its modulation scheme, error correction codes and the like). Also, the FCH (Frame Control Header) is a signal that specifies information on the BS or information (burst profile) necessary for the MS to demodulate and decode the DL sub frame (burst).

Also, the TTG is the abbreviation of Transmit/Receive Transition Gap, and means a time gap prepared to protect data when the BS transits from a transmitting state to a receiving state. The RTG is the abbreviation of Receive/Transmit Transition Gap and means a time gap prepared to protect data when the BS transits from a receiving state to a transmitting state. The same protection time (Gap) is also defined in the radio frame which is transmitted and received to/by the MS.

The MS may establish the synchronization with the radio frame transmitted from the BS by detecting the preamble signal of the DL sub frame. Also, the MS may recognize any burst (frequency and timing) with which the MS communicates with the BS in the radio frame or any modulation/demodulation scheme and any error correction code which are used for such communications by demodulating/decoding the MAP data (DL-MAP and UL-MAP) based on the FCH.

In the meantime, the IEEE 802.16j Relay Task Group has been examining the specifications of relay stations (RSs) for the purpose of simple expanding a service area (cell coverage) or improving communication throughputs (for example, see IEEE 802.16j/D1).

The RS is positioned between the MS and the BS and performs a multi-hop relay between them to achieve the above purposes. In the radio relay communication system, the BS is also called a multi-hop relay BS (MR-BS) to distinguish it from general BSs.

In the radio communication system, the MS may carry out communications irrespective of whether an object to be connected to the MS is the BS or RS considering compatibility with existing systems. That is, the MS may also start communications with the BS even while communicating with the RS.

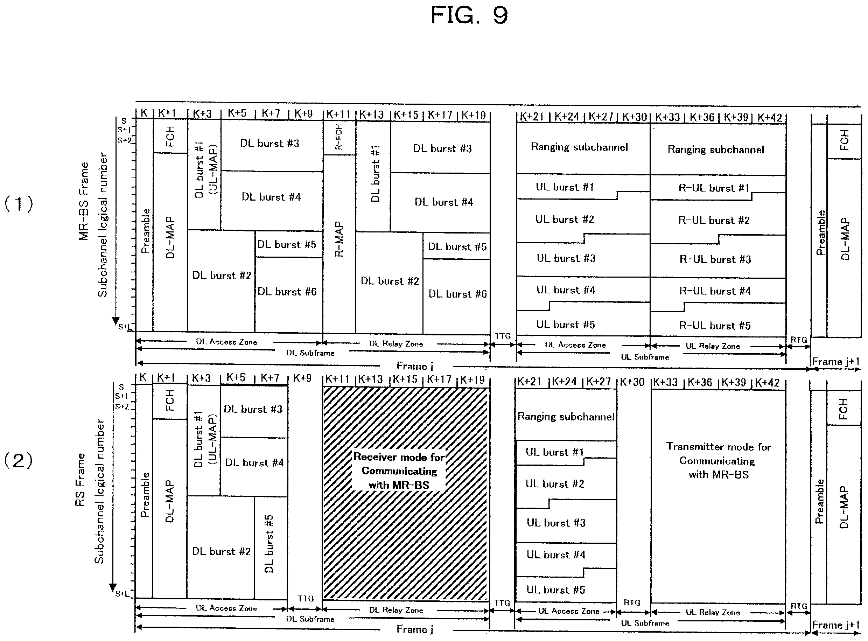

FIG. 9 illustrates an example of a radio frame format used in the radio relay communication system. This format is described, for example, in IEEE Std 802.16j/D1 or Japanese Patent Application Laid-Open No.2007-184935.

(1) of FIG. 9 illustrates an example of a radio frame format transmitted and received to/by the BS (MR-BS), and (2) of FIG. 9 illustrates an example of a radio frame format transmitted and received to/by the RS.

A basic construction of the radio frame transmitted and received to/by the BS illustrated in (1) of FIG. 9 is identical to that illustrated in FIG. 8 except that each of the DL sub frame and the UL sub frame illustrated in (a) of FIG. 9 is divided into an access zone and a relay zone in the time axis direction. That is, the DL sub frame includes a DL access zone and a DL relay zone, and the UL sub frame includes a UL access zone and a UL relay zone.

The DL/UL access zone is a period during which a BS communicates with a MS under the control of the BS, and the DL/UL relay zone is a period during which a BS communicates with a RS. That is, a BS transmits a radio signal to a MS under the control of the BS in the DL access zone, and transmits a radio signal to a RS in the subsequent DL relay zone. On the other hand, the BS receives a radio signal transmitted from the MS in the UL access zone after a TTG, and receives a radio signal transmitted from the RS in the subsequent UL relay zone.

Seeing this as a time-series shift (transition) of a transmitting/receiving state (mode) of the BS, the transmitting/receiving mode of the BS transits from a transmitting mode (for MS) through a transmitting mode (for RS) and a receiving mode (for MS) to a receiving mode (for RS) in a radio frame period.

The allocation of a burst transmitted and received between the RS and the BS may be performed by mapping MAP data (R(Relay)-MAP) for RS to the DL relay zone, and information used to demodulate/decode the R-MAP may be also designated by mapping the R(Relay)-FCH to the DL relay zone. The R-FCH or R-MAP for RS may be omitted or neglected in the MS using the FCH and MAP data from the BS in a case where the MS may directly receive the radio frame from both the BS and the RS.

In the meantime, a radio frame transmitted and received to/by the RS illustrated in (2) of FIG. 9 is similar to the radio frame illustrated in (1) of FIG. 9 in that each of the DL sub frame and the UL sub frame is divided into an access zone and a relay zone, but is different in transmitting/receiving state (mode) from the radio frame transmitted and received to/by the BS.

That is, a constant time gap TTG is added between the DL access zone and the DL relay zone and between the UL access zone and the UL relay zone, respectively, in order to protect data. The RS transmits a radio signal to the MS under the control of the RS in the DL access zone of the DL sub frame. And after a constant time gap TTG, the RS receives a radio signal from the BS in the DL relay zone. On the other hand, the RS receives a radio signal from the MS under the control of the RS in the UL access zone after a TTG. In addition, the RS transmits a radio signal to the BS in the UL relay zone after a constant time gap RTG.

Seeing this as a time-series shift (transition) of a transmitting/receiving state (mode) in the RS, the transmitting/receiving mode of the RS transits from a transmitting mode (for MS) through a receiving mode (for BS) and a receiving mode (for MS) to a transmitting mode (for BS).

Also, the MS under the control of the RS may communicate with the RS using only the access zone of the DL sub frame and the UL sub frame. In this case, the relay zone may be neglected.

In the known technology (radio frame format) described above, it is difficult to say that radio resources (bursts) is effectively used. For example, the format illustrated in FIG. 9 is configured so that the RS is only in the receiving mode in which the RS receives a radio signal from the BS in a period (DL relay zone) during which the BS transmits a radio signal to the RS.

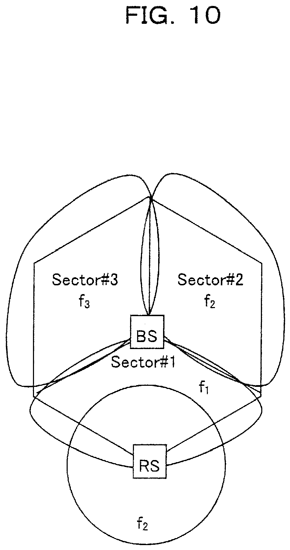

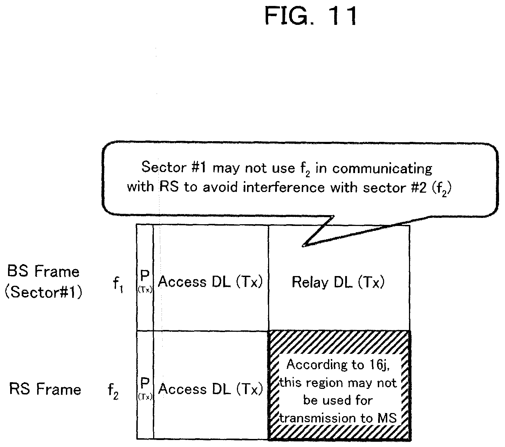

This configuration has been made considering a case where radio wave interference may occur according to sector configurations of the BS, frequencies used in each sector of the BS, and the setup of frequencies used in the RS. An example of such a case will be described below with reference to FIG. 10 and FIG. 11.

FIG. 10 is a view illustrating an example of a radio relay communication system using a RS. The radio relay communication system illustrated in FIG. 10 includes a BS that has three sectors (sectors #1, #2, and #3) and a RS that is connected to one of the three sectors.

In the three sectors #1 to #3 of the BS, the BS performs communications with the MS using frequencies $f_1$, $f_2$, and $f_3$ different from each other. Also, the frequencies $f_1$, $f_2$, and $f_3$ may correspond to "Segment" that are specified in the IEEE 802.16 standards.

In the example of FIG. 10, the BS communicates with the RS located in the sector #1 using the frequency $f_1$, and the RS communicates with the MS under the control of the RS using the frequency $f_2$.

In this case, in the sector #1, the BS performs communications with the MS under the control of the BS using the frequency (sub carrier) $f_1$ in the DL access zone of the radio frame illustrated in (1) of FIG. 9. Accordingly, the BS may not use the frequency $f_2$ or $f_3$ for transmission to the RS in the DL relay zone. This is because interference with the neighboring sector #2 (frequency $f_2$) or sector #3 (frequency $f_3$) occurs if the BS uses the frequencies $f_2$ and $f_3$. Accordingly, even when the BS transmits a radio signal to the RS in the DL relay zone, it is preferable that the BS uses the same frequency as the frequency $f_1$ (sub carrier) used for communications with the MS under the control of the BS.

Meanwhile, in a period during which the RS receives a radio signal from the BS using the frequency $f_1$, i.e. the DL relay zone (see hatching) of the radio frame illustrated in (2) of FIG. 9, it is preferable that the RS does not transmit a radio signal to the MS using the frequency $f_2$. This is because a receiving level of a signal received from the BS is considerably low compared to a transmitting level of a signal transmitted from the RS and having the frequency of $f_2$, and therefore, leaking radio wave of the transmitting signal with the frequency of $f_2$ may act as an obstacle to the receiving signal from the BS.

Due to this, the IEEE 802.16j standard specifies that the RS only may receive a signal from the BS without transmitting a signal to the MS under the control of the RS irrespective of frequencies (sub carriers) in the DL relay zone of the radio frame (region represented in the hatching in (2) of FIG. 9). That is, as illustrated schematically in FIG. 11, the RS may use the radio resource of the region represented in the hatching (DL relay zone) only for reception of a signal from the BS. Or, when the radio resource is also used for transmission of a signal, interference with adjacent sectors occurs, which inhibits proper communications.

This principle described above also applies to the UL relay zone of the radio frame for RS. For example, when the RS attempts to receive a signal from the MS under the control of the RS using the frequency $f_2$ in the period (UL relay zone) during which the RS transmits a signal to the BS using the frequency $f_1$, leaking radio wave of a transmitting signal transmitted from the RS whose frequency is $f_1$ may act as an obstacle to a receiving signal received from the MS.

As mentioned above, it is difficult to say that radio resources are effectively used in the radio frame format under the IEEE 802.16j standard.

European patent publication EP1777877A2 discloses a subframe for a link on which a Mobile Station (MS) or a Relay Station (RS) communicates with a Base Station (BS) is configured in a first frequency band, and a subframe for a link on which the BS or the RS communicates with the MS is configured in a second frequency band.

SUMMARY

It is desirable to achieve efficient utilization of radio resources in a radio relay communication.

However, other desirable outcomes may also be achieved by each exemplary embodiment to be described later but not by the prior art.

The present invention is defined in claim 1. Optional features are defined in the dependent claims.

It is possible to effectively use radio resources in the radio relay communications.

Additional advantages of the embodiments will be set forth in part in the description which follows, and in part will be obvious from the description, or may be learned by practice of the embodiments. The advantages of the embodiments will be realized and attained by means of the elements and combinations particularly pointed out in the appended claims.

It is to be understood that both the foregoing general description and the following detailed description are exemplary and explanatory only and are not restrictive of the embodiments, as claimed.

BRIEF DESCRIPTION OF THE DRAWINGS

Preferred features of the present invention will now be described, purely by way of example, with reference to the accompanying drawings, in which:-

FIG. 1 is a view illustrating an example of a radio relay communication system (two-hop system) according to a first embodiment;
FIG. 2 is a block diagram illustrating a construction example of the base station BS depicted in FIG. 1;
FIG. 3 is a block diagram illustrating a construction example of the relay station RS depicted in FIG. 1;
FIG. 4 is a block diagram illustrating a construction example of the mobile terminal depicted in FIG. 1;
FIG. 5 is a view illustrating an example of a radio frame format used for the system depicted in FIG. 1;
FIG. 6 is a view illustrating an example of a radio relay communication system (three-hop system) according to a second embodiment;
FIG. 7 is a view illustrating an example of a radio frame format used for the system depicted in FIG. 6;
FIG. 8 is a view illustrating an example of a radio frame format used in an OFDMA scheme;
FIG. 9 is a view illustrating an example of a radio frame format in a radio relay communication system;
FIG. 10 is a view illustrating a radio relay communication system; and
FIG. 11 is a view illustrating schematically a part of the radio frame format depicted in FIG. 9.

DESCRIPTION OF EMBODIMENT(S)

Hereinafter, exemplary embodiments will be described with reference to accompanying drawings. The following exemplary embodiments are merely examples and do not intend to exclude various modifications and variations to the proposed method and/or apparatus that are not specifically described herein. Rather, various modifications or variations may be made to the embodiments (for example, by combining the exemplary embodiments) without departing from the scope of the proposed method and/or apparatus.

[A] First Embodiment (two-hop system)

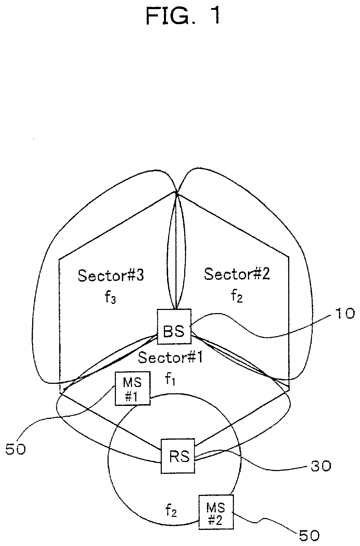

FIG. 1 is a view illustrating an example of a radio relay communication system (two-hop system) according to a first embodiment. The system illustrated in FIG. 1 may include a base station (BS) 10, a relay station (RS) 30, and one or more radio terminal (MS) 50 as an example. A radio communication scheme such as OFDMA or OFDM is used for the exemplary embodiment. However, other radio communication schemes may be easily applied to the exemplary embodiment.

Also, the BS 10 may communicate with the MS 50 under the control of the BS 10, which is located in a radio area (cell or sector) of the BS 10, through a radio link and with the RS 30 located in a radio area of the BS 10 through a radio link.

In the meantime, the RS 30 may communicate with the BS 10 through a radio link and communicate with the MS 50 located in a radio area (cell or sector) of the RS 30 through a radio link. Accordingly, the RS 30 may receive a radio signal from the BS 10 and transmit the received radio signal to the MS 50, and receive a radio signal from the MS 50 and transmit the received radio signal to the BS 10, i.e. relay a radio signal between the BS 10 and the MS 50.

Also, the MS 50 may directly communicate with the BS 10 wirelessly in a radio area of the BS 10, and communicate with the BS 10 via the RS 30 in a radio area of the RS 30. The MS 50 may directly communicate with both the BS 10 and the RS 30 in the overlapping area of the radio area of the BS 10 and the radio area of the RS 30.

Also, the BS 10 corresponds to an upper level station (first radio unit) as seen from the RS 30, and the MS 50 (MS #2) corresponds to a lower level station (second radio station).

In the example of FIG. 1, the BS 10 includes sectors #1, #2, and #3, and the RS 30 is arranged in the sector #1. The BS 10 performs communications with the MS 50 or RS 30 using frequencies $f_1$, $f_2$, and $f_3$ different from each other in the three sectors #1, #2, and #3 of the BS 10. Also, the frequencies $f_1$, $f_2$, and $f_3$ may correspond to "Segment" specified in the IEEE 802.16 standard.

In the meantime, the RS 30 performs radio communications with the MS 50 under the control of the RS 30 using the frequency (frequency $f_2$ in FIG. 1) different from the frequency (frequency $f_1$ in FIG. 1) used for communications with the BS 10. Also, the radio link between the BS 10 and the RS 30 is called "relay link" and the radio link between the BS 10 or RS 30 and the MS 50 is called "access link".

Each of the two links includes a downlink (DL) and an uplink (UL). The relay link from the BS 10 to the RS 30 is a relay DL, the relay link from the RS 30 to the BS 10 is a relay UL, the access link from the BS 10 or RS 30 to the MS 50 is an access DL, and the access link from the MS 50 to the BS 10 or RS 30 is an access UL.

The MS 50, communicating with the BS 10 or RS 30, needs to be synchronized with a radio frame transmitted from the BS 10 or RS 30. Accordingly, the BS 10 or RS 30 transmits a signal (synchronization signal) for synchronization with the radio frame. The synchronization signal maybe a different pattern of a preamble signal for each of the BS 10 and RS 30. The MS 50 may previously store plural kinds of preamble signal patterns so that a preamble signal pattern whose receiving quality (for example, receiving level) is proper or optimal may be selected as the BS 10 or RS 30 of a communication source out of the plural kinds of preamble signal patterns.

For example, when OFDMA (or OFDM) is used as the radio communication scheme, the BS 10 or RS 30 distributes transmission data to each of plural sub carriers and performs a transmission using the plural sub carriers (also referred to as sub channels). At this time, each preamble signal may be distributed over each of the sub carriers with a predetermined pattern. The MS 50 receives a predetermined combination of the sub carriers and performs a matching process using preamble signals already known in order to be capable of being synchronized with the BS 10 or RS 30 that transmits a preamble signal whose receiving quality is proper or optimal.

Furthermore, the BS 10 or RS 30 constitutes a radio frame based on the synchronization signal (preamble signal) and transmits the constituted radio frame. The MS 50 establishes frame synchronization with the radio frame using the synchronization signal and receives data mapping information (data for controlling transmitting or receiving operations of the MS 50: MAP data) in the radio frame on the basis of the synchronization signal. For example, the MAP data may be arranged to be temporally subsequent to the synchronization signal.

The MAP data may include timing, channel information, modulating scheme, and encoding scheme when data is mapped to a physical channel (burst) of the radio frame. The radio frame has a structure (format) corresponding to the MAP data. The physical channel includes a DL channel (DL burst) from the BS 10 or RS 30 to the MS 50 and a UL channel (UL burst) from the MS 50 to the BS 10 or RS 30.

Furthermore, the MS 50 may be designated using identification information, so a physical channel may be designated for each MS 50. It is also possible to transmit mapping information to plural MSs 50 (for example, all the MSs 50 in a radio area formed by one BS 10 or RS 30) without especially designating an MS 50.

Accordingly, data obtained by associating parameters used for reception (transmission) such as receiving (transmitting) timing, receiving (transmitting) channels (receiving (transmitting) sub channel pattern information) with the identifier of the MS 50 may be employed as an example of the MAP data.

The MS 50 in the radio area of the BS 10 or RS 30 directly receives the synchronization signal from the BS 10 (not via the RS 30) or RS 30 to establish synchronization. Also, the MS 50 directly receives the MAP data from the BS 10 or RS 30 based on the synchronization signal, receives a radio signal according to the reception timing and receiving channel designated by the MAP data, and transmits a radio signal according to the transmission timing and transmitting channel designated by the MAP data. By doing so, the MS 50 may perform radio communications directly with the BS 10 (not via the RS 30) or RS 30.

Furthermore, when the RS 30 does not provide communications to the MS 50 under the control of the RS 30, the RS 30 may be synchronized with the synchronization signal transmitted from the BS 10, which is a reference of the radio frame, similarly to the MS 50. On the other hand, when the RS 30 provides communications to the MS 50 under the control of the RS 30, it is preferable that the RS 30 transmits a synchronization signal to the MS 50 with the same timing as that of the BS 10.

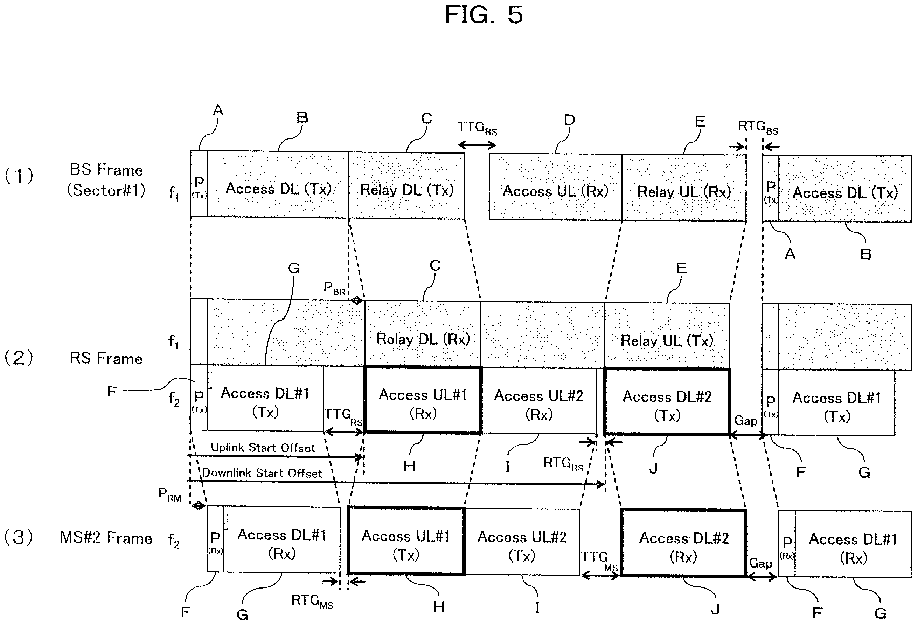

In a case where there is any MS 50 that is located outside the radio area of the BS 10 but inside the radio area of the RS 30 (for example, the MS #2 in FIG. 1), the DL data to be transmitted to the MS 50 is transmitted from the BS 10 through the relay link, and therefore, the RS 30 receives the DL data. For example, in (1) of FIG. 5, the BS 10 transmits (Tx) the DL data to the RS 30 in the relay DL period after the access DL period, which is subsequent to the preamble signal P.

Also, the RS 30 transmits a synchronization signal and MAP data in the radio area of the RS 30 so that the DL data is transmitted to MS 50 using the transmission timing and transmitting channel that have been notified to the MS 50 through the MAP data.

Similarly, the RS 30 notifies the MS 50 of a transmission timing of the UL data through the MAP data, receives user data of the UL transmitted from the MS 50 according to the notification, and transmits the user data to the BS 10 through the relay link according to the MAP data for RS (R-MAP) transmitted from the BS 10. That is, the RS 30 performs radio communications between the BS 10 and the MS 50 under the control of the RS 30. Also, the relay link which is a radio link between the BS 10 and the RS 30 needs not to be received by the MS 50.

In a case where a frequency used for radio communications (relay link) between the RS 30 and the BS 10 is identical or close to a frequency used for radio communications (access link) between the RS 30 and the MS 50, when the RS 30 transmits a radio signal to the MS 50 under the control of the RS 30 in a period during which the RS 30 receives a radio signal from the BS 10, the transmitted signal may enter into a receiving system of the RS 30, and this may make it difficult to normally receive the radio signal from the BS 10.

Accordingly, the RS 30 needs a powerful interference canceller to be capable of transmitting a radio signal to the MS 50 under the control of the RS 30 in the period during which the RS 30 receives the radio signal from the BS 10. This may cause the RS 30 to be bulky and inappropriate for actual operations.

Accordingly, in the exemplary embodiment, the RS 30 receives a radio signal from the MS 50 under the control of the RS 30 using a frequency different from a frequency used for reception of a radio signal from the BS 10 in the period during which the RS 30 receives the radio signal from the BS 10. Similarly, the RS 30 transmits a radio signal to the MS 50 under the control of the RS 30 using a frequency different from a frequency used for transmission of a radio signal to the BS 10 in the period during which the RS 30 transmits the radio signal to the BS 10. By doing so, the RS 30 may simultaneously receive radio signals from both the BS 10 and the MS 50 with different frequencies, and simultaneously transmit radio signals to both the BS 10 and the MS 50 with different frequencies as well.

In addition, the BS 10 transmits a synchronization signal for RS (referred to as "relay preamble signal" herein) to the RS 30 separately from the synchronization signal (preamble signal) which is a reference of the radio frame. The RS 30 receives the relay preamble signal transmitted from the BS 10 to establish or maintain synchronization with the BS 10 without transmitting a radio signal to the MS 50 under the control of the RS 30 in the timing when the relay preamble signal is transmitted from the BS 10.

Also, while the BS 10 transmits the MAP data to the RS 30 subsequently to the synchronization signal, the RS 30 may also transmit the MAP data to the MS 50.

In this case, the RS 30 may not receive the MAP data subsequent to the synchronization signal from the BS 10. Accordingly, the BS 10 may transmit the MAP data for RS 30 (R-MAP) to the RS 30 separately from the MAP data that is transmitted subsequently to the synchronization signal similarly to the relay preamble signal. The RS 30 performs radio communications with the BS 10 on the basis of the R-MAP.

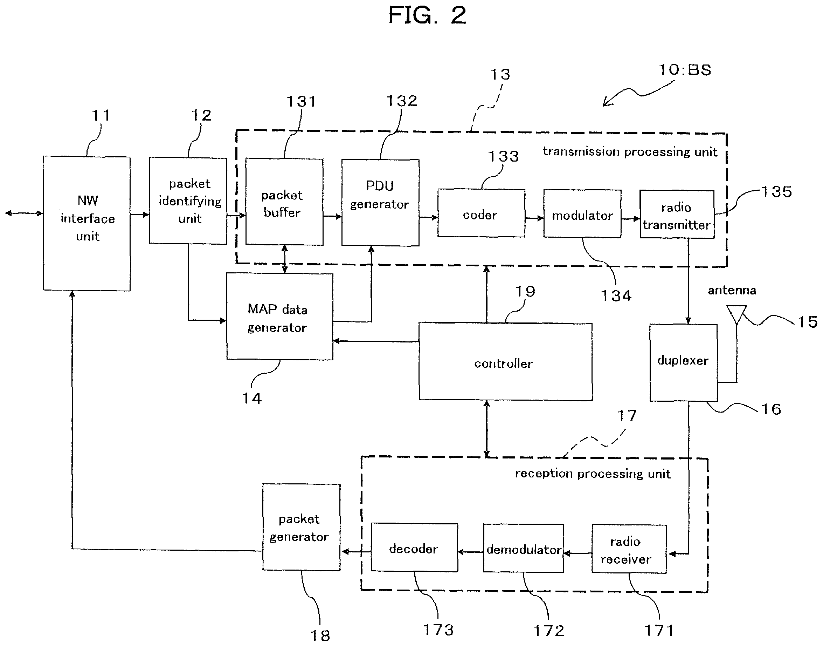

An example of a construction (function) of the BS 10, the RS 30, and the MS 50 will be described in more detail with reference to FIG. 2, FIG. 3, and FIG. 4.

(a1) BS 10

FIG. 2 is a block diagram illustrating a construction example of the BS 10. Referring to FIG. 2, the BS 10, for example, includes a network (NW) interface unit 11, a packet identifying unit 12, a transmission processing unit 13, and a MAP data generator 14. The transmission processing unit 13 includes a packet buffer 131, a PDU generator 132, a coder 133, a modulator 134, and a radio transmitter 135. Also, the BS 10 further includes a reception processing unit 17, an antenna 15, a duplexer 16, a packet generator 18, and a controller (control unit) 19. The reception processing unit 17 includes a radio receiver 171, a demodulator 172, and a decoder 173.

The antenna 15 transmits/receives a radio signal to/from the RS 30 and the MS 50.

The duplexer 16, which enables the antenna 15 to be shared by the transmission processing unit 13 and the reception processing unit 17, outputs a radio signal transmitted from the transmission processing unit 13 to the antenna 15 and outputs a radio signal received from the antenna 15 to the reception processing unit 17.

Here, the antenna 15 may be separately provided for each of the transmission processing unit 13 and the reception processing unit 17.

The NW interface unit 11 serves as an interface with a routing device (not illustrated), which is connected to the plural BSs 10 to control routes of data such as packet data. For example, the NW interface unit 11 has a protocol conversion function required for packet communications.

The packet identifying unit 12 identifies an IP address contained in the packet data received from the NW interface unit 11 and specifies a destination MS 50 (or logical connection) based on the IP address. This specification may be performed, for example, by recording a correspondence between IP addresses and identification information (MS-ID/CID) of the MS 50 (or the connection) in a memory and obtaining the MS-ID/CID corresponding to the identified IP address. Also, if there is one logical connection for one MS, the CID has the equivalent meaning to the MS-ID.

Additionally, the packet identifying unit 12 may also store a correspondence between the MS-ID (or CID) and QoS (Quality of Services) information in the memory and obtain QoS information corresponding to the specif iedMS-ID (or CID).

Also, the packet identifying unit 12 provides the obtained MS-ID, QoS information, and data size of the received packet to the controller 19 to request bandwidth allocation, and stores the packet data transmitted from the NW interface unit 11 in the packet buffer 131.

The MAP data generator 14 determines a mapping region of the radio frame according to the QoS information using the MS-ID as a key and instructs the PDU generator 132 to configure a frame depending on the determined mapping region. At this time, the MAP data generator 14 reads the data to be transmitted from the packet buffer 131 and transmits the data to the PDU generator 132 together with the MAP data.

Also, the MAP data generator 14 manages/memorizes whether the MS 50 is located inside the radio area of the BS 10 (for example, MS #1 in FIG. 1), and if the MS 50 is located inside the area of a RS 30 (for example, MS #2 in FIG. 1), the RS 30 by which the MS 50 is controlled. Also, when the MS 50 is located inside the radio area of the BS 10, the MAP data generator 14 generates the MAP data so that the BS 10 may perform a direct transmission to the MS 50, and when the MS 50 is under the control of the RS 30, the MAP data generator 14 generates the MAP data so that the BS 10 transmits transmission data to the MS 50 through the relay link (relay DL) with the RS 30.

The PDU generator 132 generates a PDU so that the MAP data and the transmission data (including measurement control data) are stored in each region of a radio frame that is formed based on the synchronization signal (preamble signal), and transmits the generated PDU to the coder 133.

The coder 133 encodes the PDU transmitted from the PDU generator 132 using a predetermined encoding scheme. Examples of the encoding scheme include a forward error correction (FEC) scheme such as a convolution coding scheme, a turbo coding scheme, and a low density parity check (LDPC) encoding scheme. The encoded PDU may be input to a bit interleaver (not illustrated) to perform interleaving on bit locations.

The modulator 134 modulates the encoded data obtained from the coder 133 using a predetermined modulation scheme such as QPSK, 16QAM, 64QAM, and the like. The modulated signal is mapped, for example, to a sub channel and a symbol specifying a DL burst.

The radio transmitter 135 performs a radio transmission process on the modulated signal obtained from the modulator 134, such as DA conversion, frequency conversion (up-conversion) to a predetermined radio frequency, or power amplification to a predetermined transmitting power. The resultant radio signal is transmitted through the duplexer 16 and the antenna 15 to the MS 50 or RS 30.

In the meantime, the radio receiver 171 of the reception processing unit 17 performs a radio reception process on a radio signal received from the MS 50 or RS 30 through the antenna 15 and the duplexer 16, such as low noise amplification, frequency conversion (downconversion) to base band frequency, and AD conversion. In addition, the radio receiver 171 may request the controller 19 to generate and transmit a message that instructs the transmitting source to correct any one of the receiving power level, frequency, and timing of the received radio signal that deviates from a predetermined range.

The demodulator 172 demodulates the received signal, which has been subj ected to the radio process, in a demodulating scheme corresponding to the modulating scheme of the transmitting source (QPSK, 16QAM, 64QAM, and the like). The demodulating process, for example, de-maps the receiving bit streams of the PDU that has been mapped to the sub channel and the symbol specifying the received burst.

For example, in a case where the encoded bit streams are subjected to bit interleaving in the transmitting source, the received bit streams may be input to a bit de-interleaver (not illustrated) to perform a de-interleaving process in a de-interleaving pattern corresponding to the interleaving pattern before a decoding process.

The decoder 173 decodes the received bit streams demodulated in the demodulator 172 in a decoding scheme corresponding to the encoding scheme (forward error correction scheme such as convolution coding, turbo coding, and LDPC coding) in the transmitting source. Also, in a case where combined bit streams of plural PDUs are subjected to a randomizing process in the transmitting source by a randomizer, the resultant bit streams may be input to a de-randomizer (not illustrated) to perform a de-randomizing process for restoration to the original bit streams.

The packet generator 18 packetizes the decoded data acquired from the decoder 173 and transmits the packetized data to the NW interface unit 11.

The controller 19 controls each of the MAP data generator 14, the transmission processing unit 13, and the reception processing unit 17 to control the transmission/reception timing of the BS 10 and transmitting/receiving channels. Furthermore, upon receiving an instruction requiring correction of the transmitting parameters from the radio receiver 171, the controller 19 generates a message that instructs the correction and instructs the transmission processing unit 13 to transmit the message along with the PDU.

(a2) RS 30

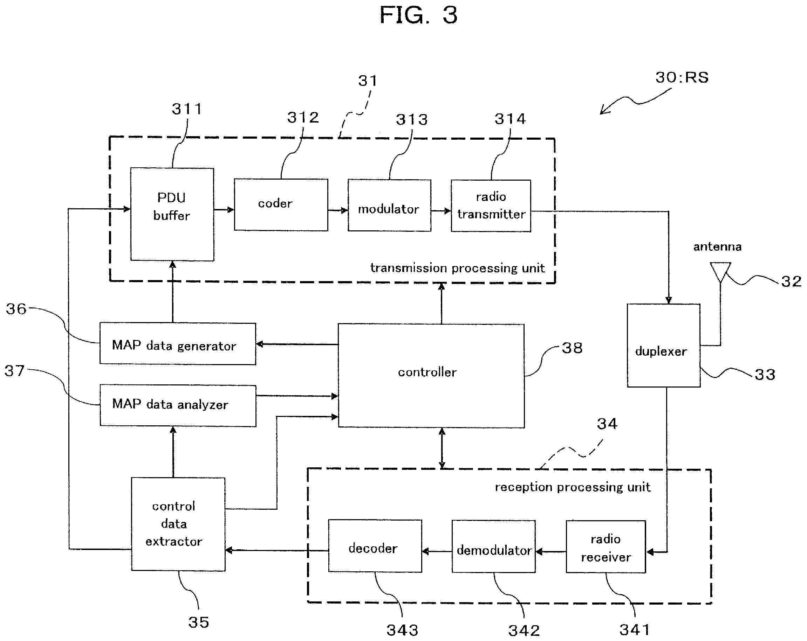

FIG. 3 illustrates a construction example of the RS 30. Referring to FIG. 3, the RS 30, for example, includes a transmission processing unit 31, which includes a PDU buffer 311, a coder 312, a modulator 313, and a radio transmitter 314. Also the RS 30 further includes an antenna 32, a duplexer 33, a reception processing unit 34, a control data extractor 35, an MAP data generator 36, an MAP data analyzer 37, and a controller (control unit) 38. The reception processing unit 34 includes a radio receiver 341, a demodulator 342, and a decoder 343.

The antenna 32 transmits/receives a radio signal to/from the BS 10 and the MS 50 (for example, MS #2 in FIG. 1) (or another RS 30).

The duplexer 33, which enables the antenna 32 to be shared by the transmission processing unit 31 and the reception processing unit 34, outputs a radio signal transmitted from the transmission processing unit 31 to the antenna 32, and outputs a radio signal received from the antenna 32 to the reception processing unit 34. Here, the antenna 32 may be separately provided for each of the transmission processing unit 31 and the reception processing unit 34.

The MAP data generator 36 generates MAP data of an access link (access DL) that designates transmission/reception timing and transmitting/receiving channel with the MS 50 under the control of the RS 30 (for example, MS #2 in FIG. 1) in response to an instruction from the controller 38 and provides the generated MAP data to the PDU buffer 311 of the transmission processing unit 31.

In the transmission through the access link (access DL), the PDU buffer 311 adds a preamble signal to a radio frame as the head in response to an instruction from the controller 38 and provides the data to the coder 312 so that the MAP data received from the MAP data generator 36 and transmission data to the MS 50 may be transmitted with the transmission timing and channel designated by the controller 38. In the transmission through the relay link (relay UL), on the other hand, the PDU buffer 311 provides the data to the coder 312 so that the transmission data to the BS 10 (or another RS 30) may be transmitted with the transmission timing and channel designated by the controller 38.

The coder 312 encodes the PDU acquired from the PDU buffer 311 using a predetermined encoding scheme. Examples of the encoding scheme include a forward error correction (FEC) encoding scheme such as a convolution coding scheme, a turbo coding scheme, and a low density parity check (LDPC) encoding scheme. The encoded PDU may be input to a bit interleaver (not illustrated) to perform interleaving on bit locations.

The modulator 313 modulates the encoded data obtained from the coder 312 using a predetermined modulation scheme such as QPSK, 16QAM, 64QAM, and the like. The modulated signal is mapped, for example, to a sub channel and a symbol specifying a burst.

The radio transmitter 314 performs a radio transmission process on the modulated signal obtained from the modulator 313, such as DA conversion, frequency conversion (up-conversion) to a predetermined radio frequency, or power amplification to predetermined transmitting power. The resultant radio signal is transmitted through the duplexer 33 and the antenna 32 to the MS 50 under the control of the RS 30 or to the BS 10 (or another RS 30).

In the meantime, the radio receiver 341 of the reception processing unit 34 performs a radio reception process on the radio signal received from the MS 50 or BS 10 (or another RS 30) through the antenna 32 and the duplexer 33, such as low noise amplification, frequency conversion (down-conversion) to a base band frequency, and AD conversion. In addition, the radio receiver 341 requests the controller 38 to generate and transmit a message that instructs the transmitting source to correct any one of the receiving power level, frequency, and timing of the received radio signal received from a low level station, which deviates from a predetermined range.

The demodulator 342 demodulates the radio receiving signal, which has been subjected to the radio process, in a demodulating scheme corresponding to the modulating scheme of the MS 50 or BS 10 (or another RS 30) (QPSK, 16QAM, 64QAM, and the like). The demodulating process, for example, de-maps the receiving bit streams of the PDU that has been mapped to the sub channel and the symbol specifying the received UL burst.

In a case where the encoded bit streams are subjected to bit interleaving in the transmitting source, the received bit streams may be input to a bit de-interleaver (not illustrated) to perform a de-interleaving process in a de-interleaving pattern corresponding to the interleaving pattern before a decoding process.

The decoder 343 decodes the received bit streams demodulated in the demodulator 342 in a decoding scheme corresponding to the encoding scheme (forward error correction scheme such as convolution coding, turbo coding, and LDPC coding) in the transmitting source. Also, in a case where combined bit streams of plural PDUs are subjected to a randomizing process in the transmitting source by a randomizer, the resultant bit streams may be input to a de-randomizer (not illustrated) to perform a de-randomizing process for restoration to the original bit streams.

The control data extractor 35 extracts the MAP data from the decoded data (received from the BS 10) obtained from the decoder 343, and provides the extracted MAP data to the MAP data analyzer 37 and transmits the data received from the BS 10, which is to be transmitted to the MS 50, to the PDU buffer 311. In a case of receiving a radio signal from the MS 50, similarly, the control data extractor 35 transmits the received data, which is to be transmitted to the BS 10, to the PDU buffer 311.

The MAP data analyzer 37 analyzes the MAP data extracted by the control data extractor 35 and provides information such as transmission/reception timing and channel to the controller 38 in order to form a relay link with the BS 10.

The controller 38 controls the process of the transmission processing unit 31 and the reception processing unit 34 to control the transmission timing, the transmitting channel, the reception timing, and the receiving channel. In addition, the controller 38 may transmit a UL start offset value which is a shifting time between transmission and reception or a time from transmission timing of the synchronization signal (preamble signal) of the RS 30 to reception start timing of the radio signal from the MS 50 under the control of the RS 30 to the MAP data generator 36, so that the UL start offset value may be included in the MAP data and therefore notified to the MS 50 under the control of the RS 30 in order to control the transmission/reception timing of the MS 50 under the control of the RS 30. Also, the reception start timing of the radio signal from the MS 50 under the control of the RS 30, defined by the UL start offset value, may be set as a value that may be symbol-synchronized with the radio signal which the RS 30 receives from the BS 10 through the relay link.

Similarly, the controller 38 enables a DL start offset value to be included in the MAP data, in which any preamble signal is not included as the head, so that the DL start offset value can be notified to the MS. Also, the transmission start timing of the radio signal from the RS 30 to the MS 50 under the control of the RS 30, which is defined by the DL start offset value may be a value which may be symbol synchronized with the radio signal which the RS 30 transmits through the relay link to the BS 10.

In a case of receiving a request that instructs a correction of the transmitting parameters from the radio receiver 341, the controller 38 generates a message that instructs the correction and instructs the transmission processing unit 31 to transmit the message along with the PDU.

(a3) MS 50

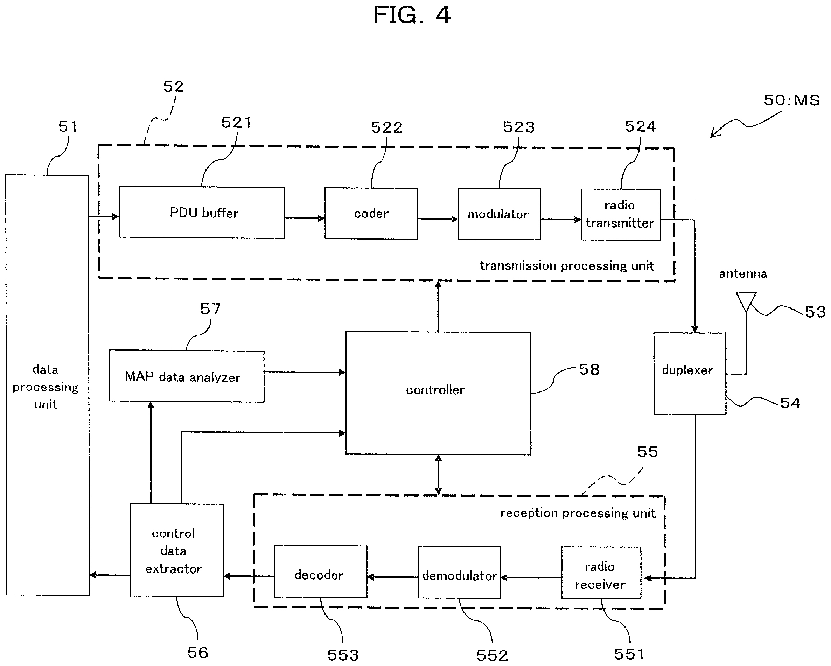

FIG. 4 illustrates a construction example of the MS 50. Referring to FIG. 4, the MS 50, for example, includes a data processing unit 51 and a transmission processing unit 52. The transmission processing unit 52 includes a PDU buffer 521, a coder 522, a modulator 523, and a radio transmitter 524. The MS 50 further includes an antenna 53, a duplexer 54, a reception processing unit 55, a control data extractor 56, an MAP data analyzer 57, and a controller (control unit) 58. The reception processing unit 55 includes a radio receiver 551, a demodulator 552, and a decoder 553.

The antenna 53 transmits and receives a radio signal to/from the RS 30 or BS 10. The duplexer 54, which enables the antenna 53 to be shared by the transmission processing unit 52 and the reception processing unit 55, outputs a radio signal transmitted from the transmission processing unit 52 to the antenna 53 and outputs a radio signal received from the antenna 53 to the reception processing unit 55. Here, the antenna 53 may be separately provided for each of the transmission processing unit 52 and the reception processing unit 55.

The data processing unit 51 has a transmission data processing function that generates transmission data (for example user data other than control data) desired to be transmitted to the RS 30 or BS 10 and transmits the generated transmission data to the PDU buffer 521 of the transmission processing unit 52 or a reception data processing function that performs a process according to reception data (for example, user data other than MAP data) transmitted from the RS 30 or BS 10 to the MS 50. Examples of the reception data processing function include a display process of various data included in the reception data, a voice output process, and the like.

The PDU buffer 521 of the transmission processing unit 52 controls the process of the transmission processing unit 52 (the coder 522 and the modulator 523) in response to an instruction from the controller 58 so that the transmission data from the data processing unit 51 may be transmitted with the transmission timing and transmitting channel designated by the MAP data that has been received from the RS 30 or BS 10.

The coder 522 encodes the PDU input from the PDU buffer 521 using a predetermined encoding scheme. Examples of the encoding scheme include a forward error correction (FEC) encoding scheme such as a convolution coding scheme, a turbo coding scheme, and a low density parity check (LDPC) encoding scheme as in the transmitting process of the BS 10 or RS 30. The encoded PDU may be input to a bit interleaver (not illustrated) to perform interleaving on bit locations.

The modulator 523 modulates the encoded bit streams obtained from the coder 522 using a predetermined modulation scheme such as QPSK, 16QAM, and 64QAM. The modulated signal is mapped, for example, to a sub channel and a symbol specifying a UL burst.

The radio transmitter 524 performs a radio transmission process on the modulated signal obtained from the modulator 523, such as DA conversion, frequency conversion (up-conversion) to a predetermined radio frequency, or power amplification to a predetermined transmitting power. The resultant radio signal is transmitted through the duplexer 54 and the antenna 53 to the RS 30 or BS 10.

In the meantime, the radio receiver 551 of the reception processing unit 55 performs a radio reception process on the DL radio signal, which is received through the antenna 53 and the duplexer 54, such as low noise amplification, frequency conversion (down-conversion) to a base band frequency, and AD conversion.

The demodulator 552 demodulates the received signal, which has been subjected to the radio reception process, in a demodulating scheme corresponding to the modulating scheme of the RS 30 or BS 10 (QPSK, 16QAM, 64QAM, and the like). The demodulating process, for example, de-maps the receiving bit streams of the PDU that has been mapped to the sub channel and the symbol specifying the received DL burst.

Also, in a case where the encoded bit streams are subjected to bit interleaving in the transmitting source, the received bit streams may be input to a bit de-interleaver (not illustrated) to perform a de-interleaving process in a de-interleaving pattern corresponding to the interleaving pattern before a decoding process.

The decoder 553 decodes the received bit streams demodulated in the demodulator 552 in a decoding scheme corresponding to the encoding scheme in the transmitting source (forward error correction scheme such as turbo coding). Also, in a case where a randomizing process has been performed on the combined bit streams of plural PDUs by a randomizer in the transmitting source, the resultant bit streams may be input to a de-randomizer (not illustrated) to be subjected to a de-randomizing process for restoration to the original bit streams.

The control data extractor 56 extracts the control data from the decoded data obtained from the decoder 553 to provide the MAP data to the MAP data analyzer 57 and the other data (for example, user data) to the data processing unit 51.

The MAP data analyzer 57 analyzes the MAP data received from the BS 10 or RS 30, detects the transmission/reception timing and transmitting/receiving channel for performing communications through the access link with the BS 10 or RS 30, and provides the detection result to the controller 58.

Based on the analysis result of the MAP data by the MAP data analyzer 57, the controller 58 controls the process of the transmission processing unit 52 and the reception processing unit 55 to control the transmission/reception timing and transmitting/receiving channel of the MS 50. In addition, when the correction request message from the BS 10 or RS 30 is extracted by the control data extractor 56, the controller 58 adjusts the transmitting parameters according to the correction value.

(a4) Operation Example

Next, an operation example of the radio relay system having the BS 10, the RS 30, and the MS 50 will be described in more detail with reference to an example of a radio frame format illustrated in FIG. 5. The radio frame format based on the IEEE 802.16 standard is described herein as an example. However, the embodiment is not limited thereto. FIG. 5 is a view illustrating schematically a radio frame format.

(1) of FIG. 5 represents a radio frame (BS frame) handled by the BS 10, (2) of FIG. 5 represents a radio frame (RS frame) handled by the RS 30, and (3) of FIG. 5 represents a radio frame (MS frame) handled by the MS 50 (for example, MS #2 in FIG. 1). Each of the radio frames is periodically and repeatedly transmitted and received on a per frame basis, with a preamble signal P added as the head of the radio frame. Also, it is assumed that the BS 10, the RS 30, and the MS 50 (MS #1 and MS #2) are arranged as illustrated in FIG. 1. However, the radio frame for the MS #1 is not illustrated in FIG. 5.

(Preamble signal)

In the meanwhile, Tx and Rx mean transmission and reception, respectively, in FIG. 5. Accordingly, each of the BS 10 and the RS 30 transmits its radio frame with the same timing, with the preamble signal P (refer to A and F) added as the head of the radio frame. At this time, the BS 10 transmits the radio frame using a frequency $f_1$ and the RS 30 transmits the radio frame using a frequency $f_2$ different from the frequency $f_1$. As described above, the preamble signal is a known signal of a predetermined pattern, which is transmitted to enable the MS 50 to be synchronized with the BS 10 or RS 30. The signal of the predetermined pattern is transmitted through each sub channel in a case of an OFDM (or OFDMA) scheme.

(Access DL region and preamble signal)

Also, each of the BS 10 and the RS 30 transmits the MAP data to the MSs 50 under the control of each of the BS 10 and the RS 30 in each access DL region (period; see B and G) which is temporally subsequent to each preamble signal (see A and F). That is, the preamble signal and the MAP data transmitted from the BS 10 using the frequency $f_1$ is received by the MS #1 and the preamble signal and the MAP data transmitted from the RS 30 using the frequency $f_2$ ($\neq f_1$) is received by the MS #2 (see F and G).

Also, even though it is described in FIG. 5 that the frequencies used for transmission of the preamble signal and the MAP data in the access DL regions (A, B, F, and G) are $f_1$ and $f_2$, this merely represents that the BS 10 and the RS 30 use the different frequencies (sub carriers or sub carrier groups (sub channels)) to avoid the radio wave interference between the BS 10 and the RS 30. For example, this does not necessarily mean that the BS 10 should transmit the access DL using the same frequency as that used for transmission of the preamble signal. That is, this means that it suffices that the frequencies $f_1$ and $f_2$ are frequencies of two sub carriers one of which is different from the other out of plural sub carriers included in a communication band. This is also true for the following cases.

As mentioned above, the MAP data is control data for notifying the transmission/reception timing and channel. For example, the MAP data includes information on the timing and channel where the MS 50 receives data from the BS 10 or RS 30, information on the used modulating scheme/encoding scheme, and information on the timing/channel and modulating/encoding schemes used to transmit data to the BS 10 or RS 30. The MAP data for DL (DL-MAP) includes radio resource allocation information of the access DL region (B, G, or J), and the MAP data for UL (UL-MAP) includes radio resource allocation information of the access UL region (D, H, or I).

Accordingly, each MS 50 receives the preamble signal directly from the BS 10 or RS 30 to be synchronized with the frame timing of the BS 10 or RS 30, receives DL/UL-MAP based on such synchronization, knows timing and channel to perform transmission and reception, and carries out transmission and reception with the BS 10 or RS 30 through the corresponding timing and channel.

(Relay DL region and relay preamble signal)

Furthermore, the BS 10 may carry out transmission to the RS 30 in the relay DL region C subsequently to the transmission in the access DL region B. In this transmission also, the BS 10 may preferably use the frequency $f_1$ in order to avoid interference with other cells or sectors.

As described above, the BS 10 may transmit the MAP data for RS 30 (R-MAP) to the RS 30 using the relay DL region C in a case where the RS 30 may not receive the MAP data transmitted from the BS 10 in the access DL region B. The R-MAP data of DL includes radio resource allocation information of the relay DL region C and the R-MAP data of UL includes radio resource allocation information of the relay UL region E.

Also, it is possible to transmit the relay preamble signal that allows the RS 30 to maintain synchronization with the BS 10 using the relay DL region C. At this time, the relay preamble signal may be transmitted at the head or end of the relay DL region C to facilitate detection in the reception side (RS 30).

(Relay DL/UL region)

Also, in a case of receiving the MAP data for RS of DL in the relay DL region C, the RS 30 analyzes the MAP data and receives a signal to be sent to the RS 30 and a signal to be sent to the MS 50 under the control of the RS 30 from the BS 10 using the timing and frequency $f_1$, the modulating scheme, and encoding scheme that have been designated in the relay DL region C.

Similarly, the RS 30 analyzes the MAP data for RS of UL and transmits a signal to be sent from the RS 30 to the BS 10 and a signal received from the MS 50 under the control of the RS 30 to the BS 10 using the timing and frequency, the modulating scheme, and encoding scheme that have been designated in the relay UL region E. In the transmission in the relay UL region E similarly to the transmission in the relay DL region C also, the frequency $f_1$ may be used to avoid radio wave interference with other cells or sectors.

(Simultaneous reception of relay DL and access UL #1)

In a period during which the RS 30 may receive a radio signal transmitted from the BS 10 using the frequency $f_1$ in the relay DL region C, a first access UL (#1) region H is defined (set), during which the RS 30 may receive a radio signal form the MS 50 under the control of the RS 30 using a frequency $f_2$ different from the frequency $f_1$.

If the first access UL #1 region H comes temporally after the access DL #1 region G in which a radio signal is transmitted to the MS 50 under the control of the RS 30, a transition (shift) of the transmitting/receiving state (mode) takes place, and therefore, it is preferable to put a non-communication time ($TTG_{RS}$) between the regions H and G for protecting data.

Also, it is illustrated in FIG. 5 that the relay DL region C and the first access UL #1 region H have the same time duration and the same start timing, but the time duration and the start timing may be different with respect to each of the relay DL region C and the first access UL #1 region H. It suffices that both regions have at least a temporally overlapping region.

For example, the relay DL region C is divided into plural regions in the time axis direction so that the divided regions may be distributed to two or more RSs 30 that are installed in the same sector #1. Alternatively or additionally, the first access UL #1 region H may be also divided into plural regions in the time axis direction so that the divided regions may be distributed to two or more MSs 50 under the control of the BS 10. This division in the time axis direction may be performed for the first access DL #1 region G or the second access UL #2 region I of the RS 30 as well.

The RS 30 may transmit the allocation information of the access UL region #1 H to the MS 50 under the control of the RS 30 to be capable of properly receiving a radio signal from the MS 50 under the control of the RS 30 using the frequency $f_2$ in the first access #1 H.

The allocation information may represent the start timing of the first access UL #1 region H as the UL start offset (Uplink Start Offset) that is represented as an offset value from the head of the radio frame (preamble signal: see F). This UL start offset value may be included in the MAP data (UL-MAP) when the RS 30 transmits the MAP data to the MS 50.

That is, the RS 30 (controller 38) may control the process of the reception processing unit 31 so that the first reception period C during which the RS 30 may receive a radio signal (frequency $f_1$) from the BS 10, which corresponds to a superordinate station, at least partially overlaps the second reception period H during which the RS 30 may receive a radio signal from the MS 50 under the control of the RS 30, which corresponds to a subordinate station, using the frequency $f_2$ different from the frequency $f_1$ of the radio signal from the BS 10.

Here, the RS 30 (controller 38) may transmit an adjustment value of the transmitting parameters (transmitting timing, frequency) of the UL to each MS 50 so that the receiving timing and frequency of the region signals (OFDM symbols) from the BS 10 and the MS 50 under the control of the RS 30 is within a certain range.

In addition, the RS 30 (controller 38) may transmit an adjustment value of the transmitting power of the UL to each MS 50 so that the sub carrier receiving power from the BS 10 and the MS 50 is within a certain range.

The adjustment of the timing, frequency, and transmitting power maybe carried out, for example, by a ranging message, and the adjustment of the transmitting power may be carried out by a transmitting power control message.

That is, the RS 30 (controller 38) may notify the MS 50, which transmits a radio signal in the second reception period H overlapping temporally the first reception period C, of the adjustment value of the transmitting power so that the receiving radio signal from the MS 50 has a receiving power level in a constant level on the basis of the receiving power level of the radio signal from the BS 10.

Also, the radio signal that the MS 50 transmits in the first access UL #1 region H may cause interference with the radio signal transmitted from the BS 10, and therefore, the RS 30 (controller 38) may generate and transmit the MAP data that allocates a radio resource limited to the MS 50 that is located near the RS 30. Whether or not the MS 50 is located near the RS 30 may be determined according to the level of receiving power, a round trip delay, and the like.

(Access UL #2 region not overlapping relay link)

In the RS 30, the second access UL #2 region I, in which the RS 30 may receive a radio signal from the MS 50 using the frequency $f_2$, may be defined (set) as an region not overlapping temporally the relay DL region C and the relay UL region E subsequently to the above mentioned first access UL #1 region H.

The RS 30 may transmit allocation information of the second access UL #2 region I to the MS 50 under the control of the RS 30. The allocation information may set symbols after the number of symbols allocated to the first access UL #1 region H as the start timing of the second access UL #2 region I on the basis of the start timing of the first access UL #1 region H. The number of symbols allocated to the first access UL #1 region H may be included in the MAP data UL-MAP when the RS 30 transmits the MAP data to the MS 50 under the control of the RS 30. Similarly to the first access UL #1 region H, the start timing of the access UL region #2 I may be represented as a value that is represented as an offset value from the head (preamble signal) of the radio frame, and may be included in the MAP data UL-MAP when the RS 30 transmits the MAP data to the MS 50 under the control of the RS 30.

Also, the RS 30 may allocate a single access UL region to the MS 50 under the control of the RS 30 not separately as the first access UL #1 region H and the second access UL #2 region I.

That is, the RS 30 (controller 38) may control the process of the reception processing unit 34 so that the second reception period I using the frequency $f_2$ which does not temporally overlap the first reception period C using the frequency $f_1$ is provided subsequently to the period H using the frequency $f_2$ which temporally overlaps the first reception period C.

(Receiving signal power level in access UL #1 region and access UL #2 region)

As described above, it is preferable that the radio signal transmitted from the MS 50 to the RS 30 using the first access UL #1 region H has the same receiving power as that of the radio signal transmitted from the BS 10 to the RS 30. However, this limitation does not apply to the second access UL #2 region I.

In a case of performing an open-loop transmitting power control in the two regions H and I, the RS 30 may notify the MS 50 under the control of the RS 30 of the receiving power level required for each region. In this case, the power level of the receiving signal is prone to increase in the first access UL #1 region H where it is preferable to comply with the power level of the receiving signal from the BS 10 in comparison with the second access UL #2 region I.

Accordingly, it is preferable that the ranging region is defined as the second access UL #2 region I so that a signal transmitted from a MS 50 that starts a new connection to the RS 30 (Initial Ranging CDMA code or the like) may be received in the second access UL #2 region I which needs not comply with the power level of the receiving signal from the BS 10.

Or, the RS 30 may perform control so that the RS 30 preferentially or restrictively communicates with the MS 50 that performs a closed loop transmitting power control without notifying the MS 50 under the control of the RS 30 of the receiving power level required for each of the two regions H and I.

In this case, the RS 30 controls allocation of radio resources so that the MS 50 which performs communications using the open-loop transmitting power control may use the second access UL #2 region I preferentially or restrictively. As a consequence, the ranging region where communications are performed using the open-loop transmitting power control is defined as the second access UL #2 region I preferentially or restrictively.

That is, the RS 30 (controller 38) may control the process of the reception processing unit 34 to receive the radio signal transmitted from the MS 50 using the open-loop transmitting power control in the second reception period I not overlapping temporally the first reception period C.

(Simultaneous transmission of relay UL and access DL #2)

In a period during which the RS 30 transmits a radio signal in the UL region E where a radio signal is received by the BS 10 using the frequency $f_1$, a second access DL (#2) region J is defined, during which the RS 30 may transmit a radio signal to the MS 50 using the frequency $f_2$ different from the frequency $f_1$.

If the second access DL #2 region J comes temporally after the second access UL #2 region I in which a radio signal is received from the MS 50, a transition from the receiving mode to the transmitting mode takes place, and therefore, it is preferable to put a non-communication time ($RTG_{RS}$) between the two regions for protecting data.

Also, it is illustrated in FIG. 5 that the relay UL region E and the second access DL #2 region J have the same time axis and the same start timing, but the time axis and start timing may be different with respect to each region. It suffices that both regions have at least a temporally overlapping region.

For example, the relay UL region E may be divided into plural regions in the time axis direction so that the divided regions may be distributed to two or more RSs 30 that are installed in the same sector #1. Alternatively or additionally, the second access DL #2 region J may be also divided into plural regions in the time axis direction so that the divided regions may be distributed to two or more MSs 50.

In addition, the RS 30 may transmit the allocation information of the second access DL #2 region J to the MS 50 so that the MS 50 may properly receive a radio signal from the RS 30. The start timing of the second access DL #2 region J may be also set, for example, as an offset value (number of symbols) on the basis of the start timing of the first access UL #1 region H or the second access UL #2 region I, or an offset value (DL start offset value) on the basis of the preamble signal. The offset value may be included in the MAP data (DL-MAP) when the RS 30 transmits the MAP data.

That is, the RS 30 (controller 38) may control the process of the transmission processing unit 31 so that the first transmission period E during which the RS 30 may transmit a radio signal (frequency $f_1$) to the BS 10 at least partially overlaps the second transmission period J during which the RS 30 may transmit a radio signal to the MS 50 under the control of the RS 30 using the frequency $f_2$ different from the frequency $f_1$ of the radio signal from the BS 10.

Here, in a case of transmitting a radio signal to the MS 50 under the control of the RS 30 during the second transmission period J, the RS 30 may keep the difference between the transmitting power level of the signal transmitted to the MS 50 and the transmitting power level of the signal transmitted to the BS 10 in a certain range in order to make the interference caused by the radio signal transmitted to the BS 10 during the first transmission period E as small as possible. In this case, it may be possible to adjust, for example, the transmitting power of the radio signal transmitted to the MS 50 on the basis of the transmitting power of the signal transmitted to the BS 10.

As a result of the adjustment, in a case where the transmitting power of the signal transmitted to the MS 50 is suppressed lower than that in the other transmission periods (for example, transmitting power in the first access DL #1 region G), it is possible to set an MS 50, which may maintain a predetermined communication quality (capacity of radio channel) even after lowering in power, as the transmitting source of the radio signal out of the MSs 50 under the control of the RS 30.

That is, the RS 30 (controller 38) may limit the MS 50, which is the transmitting source of the radio signal transmitted during the second transmission period J overlapping temporally the first transmission period E, to the MS 50 that has a predetermined radio channel condition.

Also, for example, CINR (Carrier to Interference and Noise Ratio) or RSSI (Received Signal Strength Indicator) may be used as parameters of the radio channel condition. Also, in a case where the RS 30 supports a retransmission control such as ARQ (Automatic Repeat Request) or HARQ (Hybrid ARQ), the number of receptions of an NAK (NACK) signal and a retransmission ratio that represents reception failure may be used as the parameters.

Furthermore, the RS 30 starts a transmission of the head (preamble signal) of the next radio frame after the lapse of the non-communication period (Gap) for protecting the data which is subsequent to the second access DL #2 region J.

That is, the RS 30 (controller 38) may control the process of the transmission processing unit 31 so that the second transmission period J which does not include any overlapping period with the first transmission period E starts with the synchronization signal (preamble signal) after the lapse of the non-communication time of the signal subsequent to the overlapping period.

(Recognition of radio frame by MS)

As described above, each of the BS 10 and RS 30 transmits and receives a different radio frame format. The MS 50 may determine which radio frame format is used by recognizing the information transmitted from the BS 10 and the RS 30.

For example, in a case of receiving the MAP data including the UL start offset and DL start offset, the MS 50 may recognize that the MS 50 is connected to the RS 30, and in a case of receiving the MAP data not including the UL start offset and the DL start offset, the MS 50 may recognize that the MS 50 is connected to the BS 10.

Furthermore, it may be configured that a different pattern of preamble signal is transmitted from each of the BS 10 and the RS 30 so that the MS 50 may recognize which of the BS 10 and the RS 30 the MS 50 is connected to according to such a difference in preamble signal.

(Transmission and reception in MS)

In a case of recognizing that the MS #2 is connected to the RS 30, the MS #2 may receive a synchronization signal from the RS 30 in the radio frame based on the synchronization signal F transmitted periodically from the RS 30 as illustrated in (3) of FIG. 5, and then receive a radio signal from the RS 30 in the first access DL #1 region G using the frequency $f_2$. Also, after the lapse of non-communication period ($RTG_{MS}$) for protecting data, the MS #2 may transmit a radio signal to the RS 30 in the first access UL #1 region H and the second access UL #2 region I using the frequency $f_2$. Furthermore, the MS #2 may receive a radio signal from the RS 30 in the second access DL #2 region J using the frequency $f_2$ after the lapse of non-communication period $TTG_{MS}$ for protecting data.

That is, the MS 50 (controller 58) may control the process of the transmission processing unit 52 and the reception processing unit 55 so that one radio frame includes the first reception period G during which the MS 50 may receive a radio signal from the RS 30, the transmission periods H and I during which the MS 50 may transmit a radio signal after the lapse of the non-communication period $RTG_{MS}$ subsequent to the first reception period G, and the second reception period J during which the MS 50 may receive a radio signal from the RS 30 after the lapse of the non-communication period $TTG_{MS}$ subsequent to the transmission periods H and I.

(Gap in RS access link)

Referring to FIG. 5, there are two non-communication periods $TTG_{RS}$ and $RTG_{RS}$ in the radio frame of the access link of the RS 30. It is preferable to satisfy conditions represented by the following equations (1) and (2). Here, the $P_{RM}$ means a transfer delay between the RS 30 and the MS 50.

$$TTG_{RS} \geq RTG_{MS} + 2 \times P_{RM} \dots (1)$$

$$RTG_{RS} \geq TTG_{MS} - 2 \times P_{RM} \dots (2)$$

That is, the RS 30 (controller 38) controls the process of the transmission processing unit 31 so that in the radio frame, the transmission period of the first access DL #1 region G terminates before the first access UL #1 region H (until the start timing of the $TTG_{RS}$). Similarly, the RS 30 (controller 38) terminates the reception period of the second access UL #2 region I before the second access DL #2 region J (until the start timing of $RTG_{RS}$).

As mentioned above, the first embodiment may provide a period during which transmission/reception to/from the BS 10 may be performed simultaneously to transmission/reception to/from the MS 50 using different frequencies by controlling communication transmission/reception modes in a relay link and an access link in the RS 30 of the radio relay communication system, and this may reduce more unused frequencies (sub channels) as compared to the prior art, thus improving utilization efficiency of radio frequencies.

[B] Second Embodiment (three-hop system)

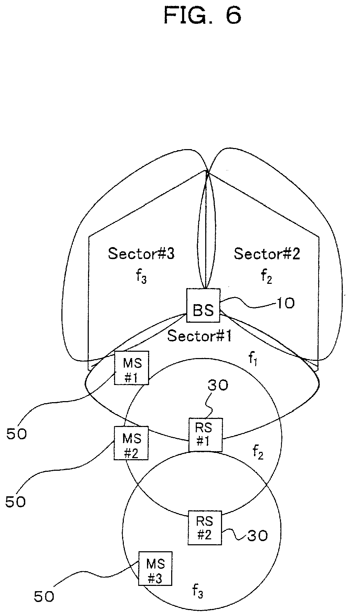

FIG. 6 is a view illustrating an example of a radio relay system (three-hop system) according to a second embodiment. The system illustrated in FIG. 6 may include a base station (BS) 10, two relay stations (RS #1 and #2) 30, and one or more radio terminal (MS) 50 for example.

In the example illustrated in FIG. 6, the BS 10 includes three sectors #1, #2, and #3. The RS #1 is located in the sector #1, and the RS #2 is located in a radio area (cell or sector) of the RS #1. In this exemplary embodiment also, a communication scheme such as OFDMA or OFDM is used as an example of the radio communication scheme. However, other radio communication methods may be easily applied to the present embodiment.

In the three sectors #1, #2, and #3 of the BS 10, the BS 10 performs radio communications with the MS 50 under the control of the BS 10 (MS #1 in FIG. 6) or the RS 30 (RS #1 in FIG. 6) under the control of the BS 10 using frequencies (sub channels) $f_1$, $f_2$, and $f_3$ different from each other.

The RS#1 performs radio communications with the MS 50 under the control of the RS 30 (MS #2 in FIG. 6) and the RS 30 (RS #2 in FIG. 6) using a frequency (frequency $f_2$ in FIG. 6) different from the frequency (frequency $f_1$ in FIG. 6) used for radio communications with the BS 10.

Similarly, the RS #2 performs radio communications with the MS 50 under the control of the RS #2 (MS #3 in FIG. 6) using a frequency (frequency $f_3$ in FIG. 6) different from the frequency (frequency $f_2$ in FIG. 6) used for radio communications with the RS #1.

That is, the MS #2 under the control of the RS #1 may communicate with the BS 10 via one RS #1, and the MS #3 under the control of the RS #2 may communicate with the BS 10 via two RSs, i.e. RS #1 and RS #2.

Also, as seen from the RS #1, the BS 10 corresponds to a superordinate station (first radio unit), and the RS #2 and the MS #2 correspond to subordinate stations (second radio unit). Similarly, as seen from the RS #2, the RS #1 corresponds to a superordinate station (first radio unit) and the MS #3 corresponds to a subordinate station (second radio unit).

Here, a radio link between BS and RS or between RS and RS is referred to as a relay link, and a radio link between BS or RS and MS is referred to as an access link. Each of the two links includes a downlink (DL) and an uplink (UL). The relay link from the BS 10 to the RS 30 is a relay DL, the relay link from the RS 30 to the BS 10 is a relay UL, the access link from the BS 10 or RS 30 to the MS 50 is an access DL, and the access link from the MS 50 to the BS 10 or RS 30 is an access UL.

In this exemplary embodiment, the construction of the BS 10 is the same as illustrated in FIG. 2, the construction of each RS 30 (RS #1 or RS #2) is the same as illustrated in FIG. 3, and the construction of each MS 50 (MS #1, MS #2, or MS #3) is the same as illustrated in FIG. 4.

Here, direct communication partners of the RS #1 are the RS #2 or MS #2 under the control of the RS #1, and a signal received from one of the communication partners is processed in the reception processing unit 34. Then, a signal processed in the transmission processing unit 31 is transmitted to one of the communication partners.

Similarly, direct communication partners of the RS #2 are the RS #1 or the MS #3 under the control of the RS #2, and a signal received from one of the communication partners is processed in the reception processing unit 34. Then, a signal processed in the transmission processing unit 31 is transmitted to one of the communication partners.

(b1) Operation Example

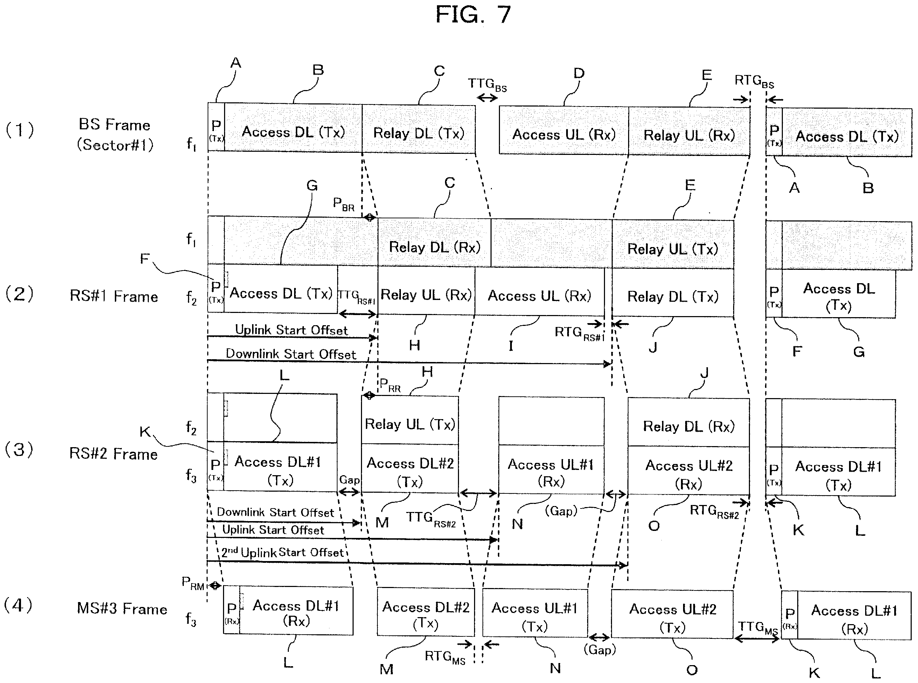

Next, an operation example of the radio relay system having the BS 10, the RS 30, and the MS 50 will be described in more detail with reference to an example of a radio frame format illustrated in FIG. 7. The radio frame format based on the IEEE 802.16 standard has been also described herein as an example. However, the present embodiment is not limited thereto. FIG. 7 is a view illustrating schematically a radio frame format.

(1) of FIG. 7 represents a radio frame (BS frame) handled by the BS 10, (2) of FIG. 7 represents a radio frame (RS #1 frame) handled by the RS #1, (3) of FIG. 7 represents a radio frame (RS #2 frame) handled by the RS #2, and (4) of FIG. 7 represents a radio frame (MS #3 frame) handled by the MS #3. Each of the radio frames is periodically and repeatedly transmitted and received on a per frame basis, with a preamble signal P added as the head of the frame. Also, it is assumed that the BS 10, the RS #1, the RS #2, the MS #1, the MS #2, and the MS #3 are arranged as illustrated in FIG. 6. However, the radio frames of the MS #1 and the MS #2 are not illustrated in FIG. 7.

(Preamble signal)

In the meanwhile, Tx and Rx means transmission and reception, respectively, in FIG. 7. Accordingly, each of the BS 10, the RS #1, and the RS #2 transmits its radio frame with the same timing, with the preamble signal P (A, F, and K) added as the head of the radio frame. That is, the BS 10, the RS #1, and the RS #2 transmit the preamble signal using a frequency $f_1$, a frequency $f_2$, and a frequency $f_3$, respectively. In this example also, the preamble signal is a known signal of a predetermined pattern, which is transmitted to enable the MS 50 to be synchronized with the BS 10 or RS 30. A signal of a predetermined pattern is transmitted through each sub channel in a case of using an OFDM (or OFDMA) scheme.

(from BS/RS to MS: access DL region and preamble signal)

Also, each of the BS 10 and the RS 30 transmits the MAP data to the MS 50 under the control of each of the BS 10 and the RS 30 in the access DL region (B, G, and L) which is subsequent to the transmission timing of each preamble signal (A, F, and K).

That is, the preamble signal and the MAP data transmitted from the BS 10 using the frequency $f_1$ are received by the MS #1, the preamble signal and the MAP data transmitted from the RS #1 using the frequency $f_2$ are received by the MS #2, and the preamble signal and the MAP data transmitted from the RS #2 using the frequency $f_3$ are received by the MS #3.

Even though it is described herein that the frequencies used for transmission in the access DL regions including the preamble signal and the MAP data are represented as $f_1$, $f_2$, and $f_3$, this merely represents that the BS 10 and the RS 30 use the different frequencies (sub carriers or sub carrier groups (sub channels)) to avoid the radio wave interference between the BS 10 and the RS 30. For example, this does not necessarily mean that the BS 10 or RS 30 should transmit the access DL using the same frequency as used for transmission of the preamble signal. That is, this means that it suffices that the frequencies $f_1$, $f_2$, and $f_3$ are frequencies of three sub carriers one of which is different from the others out of plural sub carriers included in a communication band. This is also true for the following cases.

As mentioned above, the MAP data is control data used for notifying the transmission/reception timing and transmitting/receiving channel. For example, the MAP data includes information on the timing and channel where the MS 50 receives data from the BS 10 or RS 30, information on the used modulating scheme/encoding scheme, and information on the timing/channel and modulating/encoding schemes used to transmit a signal to the BS 10 or RS 30. The MAP data for DL (DL-MAP) includes radio resource allocation information of the access DL region (B, G, L, or M), and the MAP data for UL (UL-MAP) includes radio resource allocation information of the access UL region (D, I, N, or O).

Accordingly, each MS 50 receives the preamble signal directly from the BS 10 or RS 30 to be synchronized with the frame timing of the BS 10 or RS 30, receives DL/UL-MAP based on such synchronization, knows timing and channel to perform transmissions and receptions with the BS 10 or RS 30, and carries out transmission and reception with the BS 10 or RS 30 through the corresponding timing and channel.

(from BS to RS #1: Relay DL region and relay preamble signal)

Furthermore, the BS 10 may carry out transmission to the RS #1 in the relay DL region C subsequently to the transmission in the access DL region B. In this transmission also, the BS 10 may preferably use the frequency $f_1$ in order to avoid interference with other cells or sectors.

As described above, the BS 10 may transmit the MAP data for RS #1 using the relay DL region C in a case where the RS #1 may not temporally receive the MAP data transmitted from the BS 10 in the access DL region B. The MAP data for relay of DL includes radio resource allocation information of the relay DL region C, and the MAP data for relay of UL includes radio resource allocation information of the relay UL region E.

Also, it is possible to transmit the relay preamble signal which the RS #1 uses to maintain synchronization with the BS 10 using the relay DL region C. At this time, the relay preamble signal may be transmitted at the head or end of the relay DL region C to facilitate detection in the reception side (RS #1).

(transceiving between BS and RS #1: Relay DL/UL region)

Also, the RS #1 analyzes the MAP data for relay of DL received from the BS 10 and receives a signal to be sent to the RS #1 and a signal to be sent to the MS #2 or RS #2 under the control of the RS #1 from the BS 10 using the timing and frequency, the modulating scheme, and encoding scheme that have been designated in the relay DL region C.

Similarly, the RS #1 analyzes the MAP data for relay of UL received from the BS 10 and transmits a signal to be sent from the RS #1 to the BS 10 and a signal received from the MS #2 or RS #2 under the control of the RS #1 to the BS 10 using the timing and frequency, the modulating scheme, and encoding scheme that have been designated in the relay UL region E. In the transmission in the relay UL region E similarly to the transmission in the relay DL region C also, the frequency $f_1$ may be used to avoid radio wave interference with other cells or sectors.

(from BS, RS #2 to RS #1: simultaneous reception of relay DL ($f_1$) and relay UL ($f_2$) )

Like the relationship between the BS 10 and the RS 30 in the first embodiment, in a period during which the RS #1 may receive a radio signal transmitted from the BS 10 using the frequency $f_1$ in the relay DL region C, a relay UL (#1) region H is defined, during which the RS #1 may receive a radio signal from the RS #2 under the control of the RS #1 using a frequency $f_2$ different from the frequency $f_1$.

If the relay UL region H comes temporally after the access DL #1 region G in which a radio signal is transmitted to the MS #2 under the control of the RS #1, a transition from the transmitting mode to the receiving mode takes place, and therefore, it is preferable to put a non-communication time ($TTG_{RS1}$) between the two regions for protecting data.

Also, it is illustrated in FIG. 7 that the relay DL region C using the frequency $f_1$ and the relay UL region H using the frequency $f_2$ have the same time duration and the same start timing, but the time duration and start timing may be different with respect to each region. It suffices that both regions have at least a temporally overlapping region.

For example, the relay DL region C may be divided into plural regions in the time axis direction so that the divided regions may be distributed to two or more RSs 30 including the RS #1, which are installed in the same sector #1. Alternatively or additionally, the first access UL #1 region H may be also divided into plural regions in the time axis direction so that the divided regions may be distributed to two or more RSs 30 including the RS #2 under the control of the RS #1, which are installed in the same sector (or cell) . This division of regions in the time axis direction may be performed in the access DL region G or the access UL region I of the RS #1 as well.

The RS #1 may transmit the allocation information of the relay UL region H to the RS #2 under the control of the RS #1 in order to properly receive a radio signal from the RS #2 using the frequency $f_2$ in the relay UL region H. The allocation information may be set as a UL start offset (Uplink Start Offset) value that represents the start timing of the relay UL region H as an offset value from the head of the radio frame (preamble signal: refer to F). This UL start offset value may be included in the MAP data (MAP data for relay of UL) when the RS #1 transmits the MAP data to the RS #2. Also, the receiving start timing of the radio signal from the RS #2 under the control of the RS #1, which is defined by the UL start offset value may be set as a value that may be symbol-synchronized with the radio signal that the RS #1 receives from the BS 10 through the relay link.

That is, the RS #1 (controller 38) may control the process of the reception processing unit 31 so that the first reception period C during which the RS #1 may receive a radio signal from the BS 10 which corresponds to an superordinate station using the first frequency $f_1$ at least partially overlaps the second reception period H during which the RS #1 may receive a radio signal from the RS #2 under the control of the RS #1, which corresponds to a subordinate station, using the frequency $f_2$ different from the frequency $f_1$.

Here, the MAP data of the relay UL region H using the frequency $f_2$ may be transmitted to the RS #2 in the subsequent relay DL region J using the frequency $f_2$. Accordingly, the MAP data in this case represents the MAP data of the relay UL region H using the frequency $f_2$ in one or more radio frames later but not the MAP data in the relay UL region H of the current radio frame.

Also, the RS #1 may transmit an adjustment value of the transmission timing and frequency to the RS #2 so that the reception timing or frequency of the radio signal (OFDM symbol) from the BS 10 and the RS #2 under the control of the RS #1 may be within a certain range. In addition, the RS #1 may transmit an adjustment value of transmitting power to the RS #2 so that the receiving power of the sub carriers from the BS 10 and the RS #2 under the control of the RS #1 may be within a certain range.

The adjustment of the timing, frequency, and transmitting power may be performed, for example, using the ranging message, and the adjustment of the transmitting power may be performed using the transmitting power control message.

Also, the radio signal transmitted from the RS #2 in the relay UL region H may cause interference with the radio signal transmitted from the BS 10, and therefore, the RS #1 may restrictively generate and transmit the MAP data that allocates a radio resource only to the MS 50 and RS #2 that are located near the RS #1. Whether the RS #2 and the MS 50 are located near the RS #1 may be determined according to the receiving power level and round trip delay. Here, with respect to the other RSs 30 under the control of the RS #1, the RSs 30 may be controlled to be previously allocated with radio resources according to the arrangement.

Even though the UL region of the frequency $f_2$ overlapping temporally the relay DL region C of the frequency $f_1$ partially or wholly is set as the relay UL region H in which the RS #1 communicates (receives) with the RS #2, the overlapping region may be also set as an region in which the RS #1 directly communicates with the MS #2 using the frequency $f_2$. In this case, the RS #1 may notify the MS #2 of the MAP data using the access DL region G of the frequency $f_2$.

(from MS #2 to RS #1: access UL ($f_2$) not overlapping relay link ($f_1$) )

An access UL region I may be defined, in which the RS #1 may receive a radio signal from the MS #2 under the control of the RS#1 subsequently to the above-mentioned relay UL region H of the frequency $f_2$ in which the RS #1 may receive a radio signal from the RS #2 under the control of the RS #1. Also, the RS #1 may use the region I for communications with the RS #2. In this case, the RS #1 may transmit the MAP data of the relay UL region I of the frequency $f_2$ using the relay DL region J of the frequency $f_2$, for example, in one or more radio frame.

(from RS #2, MS #2 to RS #1: power level of receiving signal in relay UL ($f_2$) and access UL ($f_2$) )

As described above, it is preferable that the radio signal transmitted from the RS #2 to the RS #1 using the relay UL region H of the frequency $f_2$ has the same receiving power as the radio signal transmitted from the BS 10 in the relay DL region C of the frequency $f_1$ in the RS #1. However, this limitation does not apply to the access UL region I of the frequency $f_2$.

In a case of performing an open-loop transmitting power control in the two regions, the RS #1 notifies the RS #2 and the MS #2 under the control of the RS #1 of the receiving power level required for each region.

In this case, the power level of the receiving signal may be prone to increase in the relay UL region H where it is preferable to comply with the power level of the receiving signal from the BS 10 in comparison with the access UL region I. Accordingly, the ranging region may be defined as the access UL region I so that a signal transmitted from a MS 50, which starts a new connection to the RS #1 (Initial Ranging CDMA code or the like), may be received in the access UL region I.

Or, the RS #1 may perform control so that the RS #1 preferentially or restrictively communicates with the RS #2 and the MS #2, which perform a closed loop transmitting power control, in the relay UL region H without notifying the RS #2 and the MS #2 under the control of the RS #1 of the receiving power level required for each of the two regions.

In this case, the RS #1 controls allocation of radio resources so that the RS #2 and the MS 50, which perform communications using the open-loop transmitting power control, may use the access UL region I preferentially or restrictively. As a consequence, the ranging region to perform communications using the open-loop transmitting power control is defined preferentially or restrictively in the access UL region I.

(from RS #1 to BS, RS #2: simultaneous transmission of relay UL ($f_1$) and relay DL ($f_2$))

In a period during which the RS #1 may transmit the relay UL region E that is received by the BS 10 using the frequency $f_1$, a relay DL region J is defined, during which the RS#1 may transmit a radio signal to the RS #2 under the control of the RS #1 using the frequency $f_2$ different from the frequency $f_1$ used for transmission to the BS 10.

If the relay DL region J comes temporally after the access UL region I in which the RS #1 receives a radio signal from the MS #2 (or RS #2) under the control of the RS #1, a transition from the receiving mode to the transmitting mode takes place, and therefore, it is preferable to put a non-communication period ($RTG_{RS1}$) between the two regions.

Also, it is illustrated in FIG. 7 that the relay UL region E and the relay DL region J have the same time duration and the same start timing, but the time duration and start timing may be different with respect to each region. It suffices that both regions have at least a temporally overlapping region.

For example, the relay UL region E may be divided into plural regions in the time axis direction so that the divided regions may be distributed to two or more RSs 30 including the RS #1, which are installed in the same sector #1. Alternatively or additionally, the relay DL region J may be also divided into plural regions in the time axis direction so that the divided regions may be distributed to two or more RSs 30 including the RS #2 under the control of the RS #1, which are installed in the same sector (or cell).

In addition, the RS #1 may transmit the allocation information of the relay DL region J to the RS #2 so that the RS #2 may normally receive a radio signal from the RS #1 using the frequency $f_2$. The start timing of the relay DL region J may be also set, for example, as an offset value (number of symbols) based on the start timing of the relay UL region H or the access UL region I, or an offset value (DL start offset value) based on the preamble signal. The offset value may be included in the MAP data (MAP data for relay of DL) when the RS #1 transmits the MAP data to the RS #2. Also, the transmitting start timing of the radio signal transmitted from the RS #1 to the RS #2 under the control of the RS #1, defined by the DL start offset value, may be set as a value that may be symbol-synchronized with the radio signal that the RS #1 transmits to the BS 10 through the relay link.

That is, the RS #1 (controller 38) may control the process of the transmission processing unit 31 so that the first transmission period E during which the RS #1 may transmit a radio signal to the BS 10, which corresponds to a superordinate station, using the frequency $f_1$ at least partially overlaps the second transmission period J during which the RS #1 may transmit a radio signal to the RS #2 under the control of the RS #1, which corresponds to a subordinate station, using the frequency $f_2$ different from the frequency $f_1$.

It is described herein that the RS #2 is set as the transmitting source; however, the MS #2 under the control of the RS #1 may be also set as the transmitting source. In this case, the DL start offset value may be included in the MAP data of DL in the access DL region G subsequent to the preamble signal, which is transmitted from the RS #1.

Also, in a case of transmitting a radio signal to the RS #2 or MS #2 under the control of the RS #1 during the second transmission period J, the RS #1 may keep the difference between the transmitting power level of the radio signal transmitted to the RS #2 or MS #2 and the transmitting power level of the radio signal transmitted to the BS 10 in a certain range in order to make the interference caused by the radio signal transmitted to the BS 10, which corresponds to a superordinate station, during the first transmission period E as small as possible. In this case, it may be possible to adjust, for example, the transmitting power of the radio signal transmitted to the RS #2 or MS #2 on the basis of the transmitting power of the radio signal transmitted to the BS 10.

As a result of the adjustment, in a case where the transmitting power of the signal transmitted to the RS #2 or MS #2 is suppressed lower than in the other transmission periods (for example, transmitting power in the access DL region G), it is possible to set an RS #2 or MS #2 that may maintain a predetermined communication quality (capacity of radio channel) even after lowering in power as the transmitting source of the radio signal out of the RSs #2 or MSs #2 under the control of the RS #1.

That is, the RS #1 (controller 38) may restrict the transmitting source of the radio signal transmitted during the second transmission period J overlapping temporally the first transmission period E to the RS #2 or MS #2 under the control of the RS #1, which has a predetermined radio channel condition.

Also, for example, CINR or RSSI may be used as parameters of the radio channel condition. Also, in a case where the RS #1 supports a retransmission control such as ARQ or HARQ, the number of receptions of an NAK signal and retransmission ratio that represent reception failure may be used as the parameters.

(from RS #1 to RS #2: relay DL and relay preamble signal)

The RS #1 transmits a radio signal to the RS #2 using the relay DL region J of the frequency $f_2$. As mentioned above, in a case where the RS #2 may not receive the MAP data transmitted from the RS #1 in the access DL region G of the frequency $f_2$, the RS #1 may transmit the MAP data for RS #2 using the relay DL region J. The MAP data for relay of DL includes radio resource allocation information of the relay DL region J of the frequency $f_2$, and the MAP data for relay of UL includes radio resource allocation information of the relay UL region H of the frequency $f_2$.

Also, the RS #1 may transmit a relay preamble signal for maintaining synchronization between the RS #1 and the RS #2 by using the relay DL region J. It is preferable that the relay preamble signal is transmitted at the head or end of the relay DL region J in order to facilitate detection at the receiving side (RS #2).

(from RS #2 to MS: transmission of access DL#2)

In one radio frame, the RS #2 defines a second access DL #2 region M during which the RS #2 may perform a transmission to the MS #3 under the control of the RS #2 using a frequency $f_3$ after the lapse of a non-communication period (Gap) for protecting data, which is subsequent to the first access DL #1 region L during which the RS #2 may perform a transmission to the MS #3 using the frequency $f_3$ after the transmission (K) of the preamble signal. The second access DL #2 region M is defined to partially or wholly overlap the relay UL region H in which the RS #2 may perform a transmission to the RS #1 using the frequency $f_2$.

Also, even though it is illustrated in FIG. 7 that the relay UL region H of the frequency $f_2$ and the access DL region M of the frequency $f_3$ have the same start timing and the same time duration, the start timing and the time duration may be different for each region. It suffices that both the regions have at least a temporally overlapping region.

For example, the relay UL region H may be divided into plural regions in the time axis direction so that the divided regions may be distributed to two or more RSs 30 including the RS #2, which are arranged under the control of the RS #1. Alternatively or additionally, the second access DL #2 region M may be also divided into plural regions in the time axis direction so that the divided regions may be distributed to two or more RSs 30 including the MS #3 which are arranged under the control of the RS #2. This division of region in the time axis direction may be also applicable to the first access DL #1 region L or the first access UL #1 region N in the RS #2.

The RS #2 may transmit the allocation information of the second access DL #2 region M to the MS #3 under the control of the RS #2 so that the MS #3 under the control of the RS #2 may properly receive a radio signal using the frequency $f_3$ in the second access DL #2 region M. The allocation information may be set as a DL start offset (Downlink Start offset) value that represents the start timing of the second access DL #2 region M as an offset value from the head (preamble signal: refer to K) of the radio frame. The DL start offset value may be included in the MAP data (DL-MAP), when the RS #2 transmits the MAP data to the MS 50 under the control of the RS #2. Also, the transmitting start timing of the radio signal from the RS #2 to the MS 50 under the control of the RS #2, which is defined by the DL start offset value, may be set as a value that may be symbol-synchronized with the radio signal transmitted from the RS #2 to the RS #1 through the relay link.

That is, the RS #2 (controller 38) may control the process of the transmission processing unit 31 so that the second transmission period M during which the RS #2 transmits a radio signal to the MS 50 under the control of the RS #2 using the frequency $f_3$ different from the frequency used for the radio signal transmitted to the RS #1, which at least partially overlaps the first transmission period H during which the RS #2 transmits a radio signal to the RS #1, which corresponds to an upper level station, using the frequency $f_2$, starts after a constant time (Gap) subsequent to the third transmission period K and L including the transmission period K of the preamble signal to the MS 50.

Here, in a case of transmitting a radio signal to the MS 50 (MS #3) under the control of the RS #2 during the second transmission period M, the RS #2 may render the difference between the transmitting power level of the radio signal transmitted to the MS #3 and the transmitting power level of the radio signal transmitted to the RS #1, which corresponds to a superordinate station, to be maintained in a certain range in order to make the interference caused by the radio signal transmitted to the RS #1, which corresponds to a superordinate station, during the first transmission period H as small as possible. In this case, it may be possible to adjust, for example, the transmitting power of the radio signal transmitted to the MS #3 on the basis of the transmitting power of the radio signal transmitted to the RS #1.

As a result of the adjustment, in a case where the transmitting power of the signal transmitted to the MS #3 is suppressed lower than that in the other transmission periods (for example, transmitting power in the first access DL #1 region L), it is possible to set an MS #3 that may maintain a predetermined communication quality (capacity of radio channel) even after lowering in power as the transmitting source of the radio signal out of the MSs #3 under the control of the RS #2.

That is, the RS #2 (controller 38) may restrict the transmitting source of the radio signal transmitted during the second transmission period M overlapping temporally the first transmission period H to the MS #3 under the control of the RS #2, which has a predetermined radio channel condition.

Also, for example, CINR or RSSI may be also used as parameters of the radio channel condition in this example. Also, in a case where the RS #1 supports a retransmission control such as ARQ or HARQ, the number of receptions of an NAK signal and retransmission ratio that represents reception failure may be used as the parameters.

(from MS to RS #2: transmission of access UL #1)

The RS #2 may define a first access UL #1 region N of a radio signal receivable from the MS #3 under the control of the RS #2 using the frequency $f_3$, which is subsequent to the first access DL #1 region L and the second access DL #2 region M of a radio signal transmittable to the MS #3 under the control of the RS #2 using the frequency $f_3$.

Also, the RS #2 does not cause any transition of transmitting/receiving state (mode) between the first access DL #1 region L and the second access DL #2 region M of the frequency $f_3$; however, a non-communication period (Gap) may be included between the two regions according to a radio wave delay between the RS #1 and the RS #2 for protecting data. In addition, a state transition from the transmitting state to the receiving state takes place between the second access DL #2 region M and the first access UL #1 region N, and therefore, a non-communication period ($TTG_{RS2}$) may be included between the two regions for protecting data.

The RS #2 may transmit the allocation information of the first access UL #1 region N to the MS #3 in order to be capable of properly receiving a radio signal from the MS #3 under the control of the RS #2 using the frequency $f_3$ in the first access UL #1 region N. The allocation information may be also set, for example, as an offset value (number of symbols) based on the start timing of the second access DL #2 region M or an offset value (UL start offset value) based on the preamble signal. The offset value may be also included in the MAP data (UL-MAP) when the RS #2 transmits the MAP data to the MS 50 under the control of the RS #2.

(from RS #1, MS to RS #2: simultaneous reception of relay DL and access UL #2)

The RS #2 may define a second access UL #2 region O during which the RS #2 may receive a radio signal from the MS #3 using the frequency $f_3$ different from the frequency $f_2$ in a period during which the RS #2 receives the relay DL region J from the RS #1 using the frequency $f_2$.

Also, it is illustrated in FIG. 7 that the relay DL region J of the frequency $f_2$ and the second access UL #2 region O of the frequency $f_3$ have the same start timing and the same time duration; however, the start timing and the time duration may be different for each region. It suffices that both regions have at least a temporally overlapping period.

For example, the relay DL region J may be divided into plural regions in the time axis direction so that the divided regions may be distributed to two or more RSs 30 including the RS #2 under the control of the RS #1. Alternatively or additionally, the second access UL #2 region O may be also divided into plural regions in the time axis direction so that the divided regions may be distributed to the two or more MSs 50 including the MS #3 under the control of the RS #3.

The RS #2 may transmit the allocation information of the second access UL #2 region O to the MS #3 in order to be capable of properly receiving a radio signal from the MS #3 under the control of the RS #2 using the frequency $f_3$ in the second access UL #2 region O. The allocation information may be set as a second UL start offset (2nd Uplink Start offset) value that represents the start timing of the second access UL #2 region O as an offset value from the head (preamble signal) of the radio frame (or the start timing of the access UL #1 region N or the access DL #2 region M is available). The second DL start offset value may be included in the MAP data (UL-MAP) when the RS #2 transmits the MAP data to the MS 50 under the control of the RS#2. Also, the receiving start timing of the radio signal from the MS #3 under the control of the RS #2, which is defined by the second UL start offset value, may be set as a value that may be symbol-synchronized with the radio signal transmitted from the RS #2 to the RS #1 through the relay link.

That is, the RS #2 (controller 38) may control the process of the reception processing unit 34 so that the second reception period 0 starts after a constant time (Gap), which is subsequent to the third reception period N. The second reception period O is a receivable period for the RS #2 to receive a radio signal from the MS 50 under the control of the RS #2 using the frequency $f_3$ different from the frequency used for the radio signal transmitted from the RS #1. And the second reception period O is also a period which is at least partially overlaps the first reception period J which the RS #2 receives the radio signal from the RS #1 corresponding to a superordinate station using the frequency $f_2$. Meanwhile, the third reception period N is a receivable period for the RS #2 to receive the radio signal from the MS 50 under the control of the RS #2 using the third frequency $f_3$. And the third reception period N is a period not overlapping temporally the first reception period J.

In addition, the RS #2 may transmit an adjustment value of the transmitting parameters (transmission timing, frequency, and the like) to the MS 50 under the control of the RS #2 so that the reception timing or frequency of the radio signal (OFDM symbol) from the MS #3 under the control of the RS #1 is within a certain range. Furthermore, the RS #2 may transmit an adjustment value of the transmitting power of the UL to the MS 50 so that the receiving power of the sub carrier transmitted from the MS #3 under the control of the RS #1 is within a certain range.

The adjustment of the transmitting parameters (transmission timing, frequency, and transmitting power) may be performed by a ranging message, and in particular, the adjustment of the transmitting power may be also performed by a transmitting power control message.

Since the radio signal transmitted from the MS #3 in the second access UL #2 region O may interfere with the radio signal transmitted from the BS 10, the RS #2 may generate the MAP data that preferentially or restrictively allocates a radio resource to the MS 50 located near the RS #2. It may be determined according to the receiving power level and round trip delay whether or not the MS 50 is located near the RS #2.

(Recognition of radio frame by MS)

As described above, each of the RS #1 and RS #2 respectively transmits and receives a different radio frame format. The MS 50 may determine which radio frame format is used by recognizing the information transmitted from the BS 10, the RS #1, and the RS #2.

For example, in a case of receiving the MAP data including the UL start offset and DL start offset, the MS 50 may recognize that the MS 50 is connected to the RS #1, and in a case of receiving the MAP data including the DL start offset, the UL start offset, and the second UL start offset, the MS 50 may recognize that the MS 50 is connected to the RS #2.

Furthermore, it may be configured that a different pattern of preamble signal is transmitted from each of the BS 10 and the RS 30 so that the MS 50 may recognize which of the BS 10 and the RS 30 the MS 50 is connected to according to such a difference in preamble signal pattern.

(Transmission and reception in MS)

In a case of recognizing that the MS #3 is connected to the RS #2, the MS #3 may receive the preamble signal from the RS #2 in one radio frame as illustrated in (4) of FIG. 7, and then receive a radio signal from the RS #2 in the first access DL #1 region L using the frequency $f_3$. Then, after the lapse of non-communication period (Gap) for protecting data, the MS #3 may receive a radio signal from the RS #2 in the second access DL #2 region M using the frequency $f_3$ once more.

Furthermore, the MS #3 may transmit a radio signal to the RS #3 in the first access UL #1 region N

using the frequency $f_3$ after the lapse of non-communication period $RTG_{MS}$ for protecting data, and transmit a radio signal to the RS #2 using the frequency $f_3$ in the second access UL #2 region O again after the lapse of non-communication period $TTG_{MS}$ for protecting data.

That is, the MS #3 (controller 58) may control the process of the transmission processing unit 52 and the reception processing unit 55 so that one radio frame, which is based on the synchronization signal periodically transmitted from the RS #2, includes the first reception period K and L including the preamble K, which the MS 50 may receive a radio signal from the RS #2, the second reception period M which the MS #3 may receive a radio signal from the RS #2 again after the lapse of the non-communication period Gap which is subsequent to the first reception period K and L, the first transmission period N which the MS #3 may transmit a radio signal to the RS #2 after the lapse of the non-communication period $RTG_{MS}$ which is subsequent to the second reception period M, and the second transmission period O which the MS #3 may transmit a radio signal to the RS #2 again after the lapse of the non-transmission period Gap which is subsequent to the first transmission period N.

(Gap in access link of RS #2)

Referring to FIG. 7, it is preferable that the $TTG_{RS2}$ and $RTG_{RS2}$ between the access links of the RS#2 in the radio frame satisfy conditions represented by the following equations (3) and (4), respectively. Here, the $P_{RM}$ means a transfer delay between the RS #2 and the MS #3.

$$TTG_{RS2} \geq RTG_{MS} + 2 \times P_{RM} \cdots (3)$$

$$RTG_{RS2} \geq TTG_{MS} - 2 \times P_{RM} \cdots (4)$$

That is, the RS #2 (controller 38) controls the process of the transmission processing unit 31 so that the transmission period of the second access DL regions L and M terminate before the first access UL #1 region N (until the start timing of the $TTG_{RS2}$). Similarly, the RS #2 (controller 38) controls the process of the reception processing unit 34 so that the reception period of the second access UL #2 region O terminates before the preamble signal of the next radio frame (until the start timing of $RTG_{RS2}$).

As mentioned above, the second embodiment (three-hop system) may also provide a period which transmission/reception to/from the superordinate station (BS 10 or RS #1) may be performed simultaneously to transmission/reception to/from the subordinate station (RS #2 or MS 50) using different frequencies by controlling communication transmission/reception modes in a relay link and an access link in the RS 30 of the radio relay communication system, and this may reduce more frequencies (sub channels) not used than the prior art, thus improving utilization efficiency of radio frequencies.

Furthermore, it is possible to improve utilization efficiency of radio frequencies by controlling transmitting/receiving mode of communications in a relaylink and an access link in a four or more hope relay communication system as described above in the first and second embodiments.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) has (have) been described in detail, it should be understood that the various changes, substitutions, and alterations could be made hereto without departing from the scope of the invention.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

1. A radio relay station (30) comprising:

   a reception processing unit (34) operable to process a radio signal received from a first external radio unit and a radio signal received from a second external radio unit; and
   a control unit (38) operable to control the process of the reception processing unit so that a first reception period in which a first radio signal is receivable from the first radio unit and a second reception period in which a second radio signal is receivable from the second radio unit are at least partially overlapped;

   **characterised in that**:

   the first radio signal and the second radio signal are receivable in different sub channels from one another out of plural sub channels included in a communication band; and

the control unit (38) is operable to notify the second radio unit, which transmits a radio signal during a portion of the second reception period, of such an adjustment value of a transmitting power that a receiving power level is within a certain range based on a receiving power level of a radio signal from the first radio unit, the portion of the second reception period temporally overlapping the first reception period.

2. The radio relay station (30) according to claim 1, wherein the control unit (38) limits the second radio unit, which is a transmitting source of the second radio signal received during the second reception period temporally overlapping the first reception period, to a radio unit whose transmitting power is less than a predetermined level.

3. The radio relay station (30) according to claim 1 or 2, wherein the control unit (38) controls the process of the reception processing unit (34) so that a further portion of the second reception period, which does not overlap temporally the first reception period, is subsequent to the portion of the second reception period which temporally overlaps the first reception period.

4. The radio relay station (30) according to claim 3, wherein the control unit (38) controls the process of the reception processing unit (34) to receive a radio signal transmitted from the second radio unit in an open-loop power control during the further portion of the second reception period.

5. The radio relay station (30) according to any of claims 1 to 4, wherein the second reception period starts a certain period after a third reception period during which a radio signal is receivable from the second radio unit, the third reception period not overlapping temporally the first reception period.

6. The radio relay station (30) according to any of claims 1 to 5, further comprising:

a transmission processing unit (31) operable to process a radio signal transmitted to the first radio unit and a radio signal transmitted to the second radio unit;

wherein the control unit (38) is operable to control the process of the transmission processing unit (31) so that a first transmission period in which a third radio signal is transmittable to the first radio unit and a second transmission period in which a fourth radio signal is transmittable to the second radio unit are at least partially overlapped; and

the third radio signal and the fourth radio signal are transmittable in the said sub channels out of the said plural sub channels.

7. The radio relay station (30) according to claim 6, wherein the second transmission period starts a certain period after a third transmission period including a synchronization signal transmitted to the second radio unit; and the second reception period starts a certain period after a third reception period during which a radio signal is receivable from the second radio unit, the third reception period not overlapping temporally the first reception period.

8. The radio relay station (30) according to any of claims 1 to 7, wherein the control unit (38) is operable to notify the second radio unit of a start timing of the second reception period.

9. The radio relay station (30) according to claim 7, wherein the control unit (38) is operable to notify the second radio unit of a start timing of the third reception period.

10. The radio relay station (30) according to claim 6 or 7, wherein the control unit (38) is operable to notify the second radio unit of a start timing of the second transmission period.

**Patentansprüche**

1. Funkrelaisstation (30), umfassend:

eine Empfangsverarbeitungseinheit (34), die so zu betreiben ist, dass sie ein von einer ersten externen Funkeinheit empfangenes Funksignal und ein von einer zweiten externen Funkeinheit empfangenes Funksignal verarbeitet; und

eine Steuereinheit (38), die so zu betreiben ist, dass sie das Verfahren der Empfangsverarbeitungseinheit so steuert, dass sich eine erste Empfangsperiode, in welcher ein erstes Funksignal von der ersten Funkeinheit zu empfangen ist, und eine zweite Empfangsperiode, in welcher ein zweites Funksignal von der zweiten Funkeinheit zu empfangen ist, zumindest teilweise überlappen;

**dadurch gekennzeichnet, dass**:

das erste Funksignal und das zweite Funksignal in unterschiedlichen Unterkanälen aus mehreren Unterkanälen zu empfangen sind, die in einem Kommunikationsband enthalten sind; und die Steuereinheit (38) so zu betreiben ist, dass sie die zweite Funkeinheit, welche während eines Abschnitts der zweiten Empfangsperiode ein Funksignal sendet, über einen solchen Anpassungswert einer Sendeleistung benachrichtigt, dass ein Empfangsleistungsniveau innerhalb eines bestimmten Bereichs liegt, basierend auf einem Empfangsleitungsniveau eines Funksignals von der ersten Funkeinheit, wobei der Abschnitt der zweiten Empfangsperiode zeitweise die erste Empfangsperiode überlappt.

2. Funkrelaisstation (30) nach Anspruch 1, wobei die Steuereinheit (38) die zweite Funkeinheit, welche eine Sendequelle des zweiten Funksignals ist, das während der zweiten Empfangsperiode empfangen wird, welche die erste Empfangsperiode zeitweise überlappt, auf eine Funkeinheit begrenzt, deren Sendeleistung geringer als ein vorgegebenes Niveau ist.

3. Funkrelaisstation (30) nach Anspruch 1 oder 2, wobei die Steuereinheit (38) das Verfahren der Empfangsverarbeitungseinheit (34) so steuert, dass auf den Abschnitt der zweiten Empfangsperiode, welcher die erste Empfangsperiode zeitweise überlappt, ein weiterer Abschnitt der zweiten Empfangsperiode folgt, welcher die erste Empfangsperiode nicht zeitweise überlappt.

4. Funkrelaisstation (30) nach Anspruch 3, wobei die Steuereinheit (38) das Verfahren der Empfangsverarbeitungseinheit (34) in einer rückführungslosen Leistungssteuerung während des weiteren Abschnitts der zweiten Empfangsperiode so steuert, dass ein von der zweiten Funkeinheit gesendetes Funksignal empfangen wird.

5. Funkrelaisstation (30) nach einem der Ansprüche 1 bis 4, wobei die zweite Empfangsperiode eine bestimmte Zeit nach einer dritten Empfangsperiode beginnt, während der ein Funksignal von der zweiten Funkeinheit zu empfangen ist, wobei die dritte Empfangsperiode die erste Empfangsperiode nicht zeitweise überlappt.

6. Funkrelaisstation (30) nach einem der Ansprüche 1 bis 5, ferner umfassend:

   eine Sendeverarbeitungseinheit (31), welche so zu betreiben ist, dass sie ein an die erste Funkeinheit gesendetes Funksignal und ein an die zweite Funkeinheit gesendetes Funksignal verarbeitet;
   wobei die Steuereinheit (38) so zu betreiben ist, dass sie das Verfahren der Sendeverarbeitungseinheit (31) so steuert, dass sich eine erste Sendeperiode, in welcher ein drittes Funksignal an die erste Funkeinheit zu senden ist, und eine zweite Sendeperiode, in welcher ein viertes Funksignal an die zweite Funkeinheit zu senden ist, zumindest teilweise überlappen; und
das dritte Funksignal und das vierte Funksignal in den Unterkanälen aus den mehreren Unterkanälen zu senden sind.

7. Funkrelaisstation (30) nach Anspruch 6, wobei die zweite Sendeperiode eine bestimmte Zeit nach einer dritten Sendeperiode beginnt, umfassend ein Synchronisationssignal, das an die zweite Funkeinheit gesendet wird; und die zweite Empfangsperiode eine bestimmte Zeit nach einer dritten Empfangsperiode beginnt, während der ein Funksignal von der zweiten Funkeinheit zu empfangen ist, wobei die dritte Empfangsperiode die erste Empfangsperiode nicht zeitweise überlappt.

8. Funkrelaisstation (30) nach einem der Ansprüche 1 bis 7, wobei die Steuereinheit (38) so zu betreiben ist, dass sie die zweite Funkeinheit über eine Startzeit der zweiten Empfangsperiode benachrichtigt.

9. Funkrelaisstation (30) nach Anspruch 7, wobei die Steuereinheit (38) so zu betreiben ist, dass sie die zweite Funkeinheit über eine Startzeit der dritten Empfangsperiode benachrichtigt.

10. Funkrelaisstation (30) nach Anspruch 6 oder 7, wobei die Steuereinheit (38) so zu betreiben ist, dass sie die zweite Funkeinheit über eine Startzeit der zweiten Sendeperiode benachrichtigt.

## Revendications

1. Station de relais radio (30) comprenant :

   une unité de traitement de réception (34) exploitable pour traiter un signal radio reçu en provenance d'une première unité radio externe et un signal radio reçu en provenance d'une seconde unité radio externe ; et
   une unité de commande (38) exploitable pour commander le processus de l'unité de traitement de réception de sorte qu'une première période de réception dans laquelle un premier signal radio peut être reçu en provenance de la première unité radio et une deuxième période de réception dans laquelle un deuxième signal radio peut être reçu en provenance de la seconde unité radio soient au moins partiellement chevauchées ;

   **caractérisée en ce que** :

   le premier signal radio et le deuxième signal radio peuvent être reçus dans des sous-canaux différents l'un de l'autre parmi plusieurs sous-canaux inclus dans une bande de communication ; et

l'unité de commande (38) est exploitable pour notifier à la seconde unité radio, qui transmet un signal radio pendant une partie de la deuxième période de réception, une valeur d'ajustement d'une puissance de transmission telle qu'un niveau de puissance de réception est à l'intérieur d'une certaine plage basée sur un niveau de puissance de réception d'un signal radio en provenance de la première unité radio, la partie de la deuxième période de réception chevauchant temporellement la première période de réception.

2. Station de relais radio (30) selon la revendication 1, dans laquelle l'unité de commande (38) limite la seconde unité radio, qui est une source de transmission du deuxième signal radio reçu au cours de la deuxième période de réception chevauchant temporellement la première période de réception, à une unité radio dont la puissance de transmission est inférieure à un niveau prédéterminé.

3. Station de relais radio (30) selon la revendication 1 ou 2, dans laquelle l'unité de commande (38) commande le processus de l'unité de traitement de réception (34) de sorte qu'une autre partie de la deuxième période de réception, qui ne chevauche pas temporellement la première période de réception, soit postérieure à la partie de la deuxième période de réception qui chevauche temporellement la première période de réception.

4. Station de relais radio (30) selon la revendication 3, dans laquelle l'unité de commande (38) commande le processus de l'unité de traitement de réception (34) pour recevoir un signal radio transmis à partir de la seconde unité radio dans une commande de puissance en boucle ouverte pendant l'autre partie de la deuxième période de réception.

5. Station de relais radio (30) selon l'une quelconque des revendications 1 à 4, dans laquelle la deuxième période de réception commence une certaine période après une troisième période de réception au cours de laquelle un signal radio peut être reçu en provenance de la seconde unité radio, la troisième période de réception ne chevauchant pas temporellement la première période de réception.

6. Station de relais radio (30) selon l'une quelconque des revendications 1 à 5, comprenant en outre :

une unité de traitement de transmission (31) exploitable pour traiter un signal radio transmis à la première unité radio et un signal radio transmis à la seconde unité radio ;

dans laquelle l'unité de commande (38) est exploitable pour commander le processus de l'unité de traitement de transmission (31) de sorte qu'une première période de transmission dans laquelle un troisième signal radio peut être transmis à la première unité radio et une deuxième période de transmission dans laquelle un quatrième signal radio peut être transmis à la seconde unité radio soient au moins partiellement chevauchées ; et

le troisième signal radio et le quatrième signal radio peuvent être transmis dans lesdits sous-canaux parmi lesdits plusieurs sous-canaux.

7. Station de relais radio (30) selon la revendication 6, dans laquelle la deuxième période de transmission commence une certaine période après une troisième période de transmission incluant un signal de synchronization transmis à la seconde unité radio ; et la deuxième période de réception commence une certaine période après une troisième période de réception au cours de laquelle un signal radio peut être reçu en provenance de la seconde unité radio, la troisième période de réception ne chevauchant pas temporellement la première période de réception.

8. Station de relais radio (30) selon l'une quelconque des revendications 1 à 7, dans laquelle l'unité de commande (38) est exploitable pour notifier à la seconde unité radio un positionnement temporel de commencement de la deuxième période de réception.

9. Station de relais radio (30) selon la revendication 7, dans laquelle l'unité de commande (38) est exploitable pour notifier à la seconde unité radio un positionnement temporel de commencement de la troisième période de réception.

10. Station de relais radio (30) selon la revendication 6 ou 7, dans laquelle l'unité de commande (38) est exploitable pour notifier à la seconde unité radio un positionnement temporel de commencement de la deuxième période de transmission.

FIG. 1

# FIG. 2

10:BS

transmission processing unit — 13

- radio transmitter — 135
- modulator — 134
- coder — 133
- PDU generator — 132
- packet buffer — 131

MAP data generator — 14

antenna — 15

duplexer — 16

controller — 19

reception processing unit — 17

- radio receiver — 171
- demodulator — 172
- decoder — 173

packet generator — 18

packet identifying unit — 12

NW interface unit — 11

# FIG. 3

EP 2 088 814 B1

# FIG. 4

50:MS

antenna

53

duplexer — 54

**transmission processing unit** — 52

- PDU buffer — 521
- coder — 522
- modulator — 523
- radio transmitter — 524

controller — 58

MAP data analyzer — 57

**reception processing unit** — 55

- radio receiver — 551
- demodulator — 552
- decoder — 553

control data extractor — 56

data processing unit — 51

FIG. 5

# FIG. 6

# FIG. 7

EP 2 088 814 B1

FIG. 8

# FIG. 9

# FIG. 10

Sector#3
$f_3$

Sector#2
$f_2$

BS

Sector#1

$f_1$

RS

$f_2$

# FIG. 11

EP 2 088 814 B1

Sector #1 may not use $f_2$ in communicating with RS to avoid interference with sector #2 ($f_2$)

| | | | |
|---|---|---|---|
| BS Frame (Sector#1) | $f_1$ | P (Tx) | Access DL (Tx) | Relay DL (Tx) |
| RS Frame | $f_2$ | P (Tx) | Access DL (Tx) | According to 16j, this region may not be used for transmission to MS |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007184935 A

- EP 1777877 A2